# EUROPEAN PATENT APPLICATION

(11) **EP 4 694 473 A1**
(43) Date of publication of application: **11.02.2026**
(21) Application number: 23929545.4
(22) Date of filing: 31.03.2023
(51) Int. Cl.: H04W 72/1268, H04W 72/21, H04W 72/0446

(54) **COMMUNICATION METHOD, APPARATUS AND DEVICE, AND STORAGE MEDIUM**

(71) Applicant: Beijing Xiaomi Mobile Software Co., Ltd., Beijing 100085 (CN)
(72) Inventor: TAO, Xuhua, Beijing 100085 (CN)
(74) Representative: Dehns Germany Partnerschaft mbB
(86) International application number: PCT/CN2023/085813
(87) International publication number: WO 2024/197962

(57) **Abstract**

The present disclosure relates to a communication method, apparatus and device, and a storage medium. The method comprises: determining at least two time windows; in response to a terminal being located within one time window of the at least two time windows at a current moment, on the basis of a time advance corresponding to the time window where the terminal is located at the current moment, determining an uplink time unit boundary for the terminal to send uplink data; and on the basis of the uplink time unit boundary, sending the uplink data. Determining different time windows, using within a corresponding time window a corresponding time advance to determine an uplink time unit boundary and sending uplink data can enable terminals to adapt to different scenarios, thus improving the data transmission performance while ensuring the interference measurement precision.

## Description

### TECHNICAL FIELD

The present disclosure relates to the communication technical field, and in particular to a communication method and apparatus, a device, and a storage medium.

### BACKGROUND

In related art, a Dynamic Time Division Duplex (DTDD) scenario is used for improving corresponding uplink communication performance. The proportion of uplink (UL) transmission slots in a Time Division Duplex (TDD) configuration is increased accordingly. The DTDD, also known as dynamic TDD, dynamically adjusts the proportions of UL and downlink (DL) transmission slots in a TDD configuration. Assuming that a serving cell and a neighboring cell dynamically adjust the TDD structures in their respective cells differently, this results in inconsistent TDD structures in respective cells, such as inconsistent transmission directions in the two cells, thus leading to severe interference.

In order to measure the interference situation among multiple network devices in two neighboring cells, the corresponding interference may be measured by sending a reference signal by a network device. Since the reference signal only occupies a part of frequency domain resources, in order to improve resource utilization efficiency, a network device may receive uplink data sent by a terminal in the same serving cell and a reference signal sent by a network device in a neighboring cell at the same time. For the network device in the serving cell, the network device receives the reference signal and uplink data at the same time, which causes serious inter-symbol interference (ISI).

### SUMMARY

In order to overcome the problem existing in the related art, the present disclosure provides a communication method and apparatus, a device and a storage medium.

According to a first aspect of an embodiment of the present disclosure, a communication method is provided. The method is performed by a terminal. The method includes: determining at least two time windows; in response to the terminal being in one of the at least two time windows at a current moment, determining, based on a timing advance corresponding to the time window which the terminal is in at the current moment, an uplink time unit boundary for the terminal to send uplink data, wherein a specific time window is one of the at least two time windows; and sending the uplink data based on the uplink time unit boundary.

In some implementations, the at least two time windows are determined by at least one of: receiving first configuration information, and determining the at least two time windows based on the first configuration information; or determining the at least two time windows based on a predefined rule.

In some implementations, the first configuration information includes: a starting position of the time window and the number of time units included in the time window; or the starting position of the time window and an ending position of the time window.

In some implementations, the predefined rule includes: predefining a starting position of the time window and the number of time units included in the time window; or predefining the starting position of the time window and an ending position of the time window.

In some implementations, the at least two time windows includes a first time window, the first time window includes at least one sub-time window, and the sub-time window includes multiple consecutive uplink time units.

In some implementations, the at least two time windows include a first time window, the first time window includes at least one sub-time window, and the sub-time window includes at least one interference measurement time unit.

In some implementations, the interference measurement time unit is part or all of multiple consecutive uplink time units in the first time window.

In some implementations, the sub-time window includes a maximum number of multiple consecutive uplink time units.

In some implementations, the time unit includes any one of: an Orthogonal Frequency Division Multiplexing (OFDM) symbol; a slot; a frame; or a subframe.

In some implementations, in response to the time window which the terminal is in at the current moment being a first time window, the terminal does not expect to send an uplink channel or an uplink signal on the last symbol before uplink/downlink switching; and/or, in response to the time window in which the terminal is in at the current moment being the first time window, the terminal does not expect to receive a downlink channel or a downlink signal on the first symbol after the uplink/downlink switching; and/or, in response to the time window which the terminal is in at the current moment being the first time window, the terminal does not expect to receive a downlink channel or a downlink signal on the last symbol before downlink/uplink switching; and/or, in response to the time window which the terminal is in at the current moment being the first time window, the terminal does not expect to send an uplink channel or an uplink signal on the first symbol after the downlink/uplink switching.

In some implementations, the at least two time windows include a first time window and a second time window, the first time window is a time window corresponding to an interference measurement performed by a network device, and the second time window is a time window corresponding to other than the interference measurement performed by the network device.

In some implementations, a timing advance corresponding to the first time window is less than or equal to 0.

In some implementations, a timing advance corresponding to the second time window is greater than or equal to 0.

According to a second aspect of an embodiment of the present disclosure, a communication method is provided. The method is performed by a network device. The method includes: determining at least two time windows; in response to the network device being in one of the at least two time windows at a current moment, determining, based on a timing advance corresponding to the time window which the network device is in at the current moment, an uplink time unit boundary for the network device to receive uplink data, wherein a specific time window is one of the at least two time windows; and receiving the uplink data based on the uplink time unit boundary.

In some implementations, the at least two time windows are determined by at least one of: determining the at least two time windows, and sending first configuration information, wherein the first configuration information is used to indicate the at least two time windows; or determining the at least two time windows based on a predefined rule.

In some implementations, the first configuration information includes: a starting position of the time window and the number of time units included in the time window; or the starting position of the time window and an ending position of the time window.

In some implementations, the predefined rule includes: predefining a starting position of the time window and the number of time units included in the time window; or predefining the starting position of the time window and an ending position of the time window.

In some implementations, the at least two time windows include a first time window, the first time window includes at least one sub-time window, and the sub-time window includes multiple consecutive uplink time units.

In some implementations, the at least two time windows include a first time window, the first time window includes at least one sub-time window, and the sub-time window includes at least one interference measurement time unit.

In some implementations, the interference measurement time unit is part or all of multiple consecutive uplink time units in the first time window.

In some implementations, the sub-time window includes a maximum number of multiple consecutive uplink time units.

In some implementations, the time unit includes any one of: an OFDM symbol; a slot; a frame; or a subframe.

In some implementations, in response to the time window which the network device is in at the current moment being a first time window, the network device does not expect to receive an uplink channel or an uplink signal from a terminal on the last symbol before uplink/downlink switching; and/or, in response to the time window which the network device is in at the current moment being the first time window, the network device does not expect to send a downlink channel or a downlink signal to the terminal on the first symbol after the uplink/downlink switching; and/or, in response to the time window which the network device is in at the current moment being the first time window, the network device does not expect to send a downlink channel or a downlink signal to the terminal on the last symbol before downlink/uplink switching; and/or, in response to the time window which the network device is in at the current moment being the first time window, the network device does not expect to receive an uplink channel or an uplink signal from the terminal on the first symbol after the downlink/uplink switching.

In some implementations, the at least two time windows includes a first time window and a second time window, the first time window is a time window corresponding to an interference measurement performed by the network device, and the second time window is a time window corresponding to other than the interference measurement performed by the network device.

In some implementations, a timing advance corresponding to the first time window is less than or equal to 0.

In some implementations, a timing advance corresponding to the second time window is greater than or equal to 0.

According to a third aspect of an embodiment of the present disclosure, a communication apparatus is provided. The apparatus includes: a processing module configured to determine at least two time windows; wherein the processing module is further configured to, in response to a terminal being in one of the at least two time windows at a current moment, determine, based on a timing advance corresponding to the time window which the terminal is in at the current moment, an uplink time unit boundary for the terminal to send uplink data, wherein a specific time window is one of the at least two tine windows; and a sending module configured to send the uplink data based on the uplink time unit boundary.

In some implementations, the at least two time windows are determined by at least one of: receiving first configuration information, and determining the at least two time windows based on the first configuration information; or determining the at least two time windows based on a predefined rule.

In some implementations, the first configuration information includes: a starting position of the time window and the number of time units included in the time window; or the starting position of the time window and an ending position of the time window.

In some implementations, the predefined rule includes: predefining a starting position of the time window and the number of time units included in the time window; or predefining the starting position of the time window and an ending position of the time window.

In some implementations, the at least two time windows include a first time window, the first time window includes at least one sub-time window, and the sub-time window includes multiple consecutive uplink time units.

In some implementations, the at least two time windows include a first time window, the first time window includes at least one sub-time window, and the sub-time window includes at least one interference measurement time unit.

In some implementations, the interference measurement time unit is part or all of multiple consecutive uplink time units in the first time window.

In some implementations, the sub-time window includes a maximum number of multiple consecutive uplink time units.

In some implementations, the time unit includes any one of: an OFDM symbol; a slot; a frame; or a subframe.

In some implementations, in response to the time window which the terminal is in at the current moment being a first time window, the terminal does not expect to send an uplink channel or an uplink signal on the last symbol before uplink/downlink switching; and/or, in response to the time window in which the terminal is in at the current moment being the first time window, the terminal does not expect to receive a downlink channel or a downlink signal on the first symbol after the uplink/downlink switching; and/or, in response to the time window which the terminal is in at the current moment being the first time window, the terminal does not expect to receive a downlink channel or a downlink signal on the last symbol before downlink/uplink switching; and/or, in response to the time window which the terminal is in at the current moment being the first time window, the terminal does not expect to send an uplink channel or an uplink signal on the first symbol after the downlink/uplink switching.

In some implementations, the at least two time windows include a first time window and a second time window, the first time window is a time window corresponding to an interference measurement performed by a network device, and the second time window is a time window corresponding to other than the interference measurement performed by the network device.

In some implementations, a timing advance corresponding to the first time window is less than or equal to 0.

In some implementations, a timing advance corresponding to the second time window is greater than or equal to 0.

According to a fourth aspect of an embodiment of the present disclosure, a communication apparatus is provided. The apparatus includes: a processing module configured to determine at least two time windows; wherein the processing module is further configured to, in response to a network device being in one of the at least two time windows at a current moment, determine, based on a timing advance corresponding to the time window which the network device is in at the current moment, an uplink time unit boundary for the network device to receive uplink data, wherein a specific time window is one of the at least two time windows; and a receiving module configured to receive the uplink data based on the uplink time unit boundary.

In some implementations, the at least two time windows are determined by at least one of: determining the at least two time windows, and sending first configuration information, wherein the first configuration information is used to indicate the at least two time windows; or determining the at least two time windows based on a predefined rule.

In some implementations, the first configuration information includes: a starting position of the time window and the number of time units included in the time window; or the starting position of the time window and an ending position of the time window.

In some implementations, the predefined rule includes: predefining a starting position of the time window and the number of time units included in the time window; or predefining the starting position of the time window and an ending position of the time window.

In some implementations, the at least two time windows include a first time window, the first time window includes at least one sub-time window, and the sub-time window includes multiple consecutive uplink time units.

In some implementations, the at least two time windows include a first time window, the first time window includes at least one sub-time window, and the sub-time window includes at least one interference measurement time unit.

In some implementations, the interference measurement time unit is part or all of multiple consecutive uplink time units in the first time window.

In some implementations, the sub-time window includes a maximum number of multiple consecutive uplink time units.

In some implementations, the time unit includes any one of: an OFDM symbol; a slot; a frame; or a subframe.

In some implementations, in response to the time window which the network device is in at the current moment being a first time window, the network device does not expect to receive an uplink channel or an uplink signal from a terminal on the last symbol before uplink/downlink switching; and/or, in response to the time window which the network device is in at the current moment being the first time window, the network device does not expect to send a downlink channel or a downlink signal to the terminal on the first symbol after the uplink/downlink switching; and/or, in response to the time window which the network device is in at the current moment being the first time window, the network device does not expect to send a downlink channel or a downlink signal to the terminal on the last symbol before downlink/uplink switching; and/or, in response to the time window which the network device is in at the current moment being the first time window, the network device does not expect to receive an uplink channel or an uplink signal from the terminal on the first symbol after the downlink/uplink switching.

In some implementations, the at least two time windows include a first time window and a second time window, the first time window is a time window corresponding to an interference measurement performed by the network device, and the second time window is a time window corresponding to other than the interference measurement performed by the network device.

In some implementations, a timing advance corresponding to the first time window is less than or equal to 0.

In some implementations, a timing advance corresponding to the second time window is greater than or equal to 0.

According to a fifth aspect of an embodiment of the present disclosure, a communication device is provided. The communication device includes: a processor; and a memory configured to store instructions executable by the processor. The processor is configured to perform the method in the first aspect or the method according to any one of the implementations in the first aspect.

According to a sixth aspect of an embodiment of the present disclosure, a communication device is provided. The communication device includes: a processor; and a memory configured to store instructions executable by the processor. The processor is configured to perform the method in the second aspect or the method according to any one of the implementations in the second aspect.

According to a seventh aspect of an embodiment of the present disclosure, a non-transitory computer-readable storage medium is provided. When instructions in the storage medium are executed by a processor of a terminal, the terminal is caused to be able to perform the method in the first aspect or the method according to any one of the implementations in the first aspect.

According to an eighth aspect of an embodiment of the present disclosure, a non- transitory computer-readable storage medium is provided. When the instructions in the storage medium are executed by a processor of a network device, the network device is caused to be able to perform the method in the second aspect or the method according to any one of the implementations in the second aspect.

The technical solutions provided by the embodiments of the present disclosure can bring the following beneficial effects: by determining different time windows and using a corresponding timing advance in a corresponding time window to determine the uplink time unit boundary and to send the uplink data, the terminal can adapt to different scenarios, thereby ensuring interference measurement accuracy while improving data transmission performance.

It is to be understood that the foregoing general description and the following detailed description are illustrative and explanatory only and are not restrictive of the present disclosure.

### BRIEF DESCRIPTION OF THE DRAWINGS

The accompanying drawings, which are incorporated in and constitute a part of the specification, illustrate embodiments consistent with the present disclosure and, together with the specification, serve to explain the principles of the present disclosure.
FIG. 1 is a schematic diagram of a wireless communication system according to an example embodiment.
FIG. 2 is a schematic diagram of an interference scenario according to an example embodiment.
FIG. 3 is a schematic diagram of ISI interference according to an example embodiment.
FIG. 4 is a schematic diagram of a timing sequence of transmission symbols according to an example embodiment.
FIG. 5 is a flowchart of a communication method according to an example embodiment.
FIG. 6 is a schematic diagram of uplink symbols in a first time window according to an example embodiment.
FIG. 7 is a schematic diagram of uplink symbols in a second time window according to an example embodiment.
FIG. 8 is a schematic diagram of a sub-time window according to an example embodiment.
FIG. 9 is a flowchart of another communication method according to an example embodiment.
FIG. 10 is a schematic diagram of a time window according to an example embodiment.
FIG. 11 is a schematic diagram of a communication apparatus according to an example embodiment.
FIG. 12 is a schematic diagram of another communication apparatus according to an example embodiment.
FIG. 13 is a schematic diagram of a communication device according to an example embodiment.
FIG. 14 is a schematic diagram of another communication device according to an example embodiment.

### DETAILED DESCRIPTION

Example embodiments are described in detail herein, with examples illustrated in the accompanying drawings. When the following description refers to the drawings, the same numerals in different drawings represent the same or similar elements unless otherwise indicated. The implementations described in the following example embodiments are not intended to represent all implementations consistent with the present disclosure.

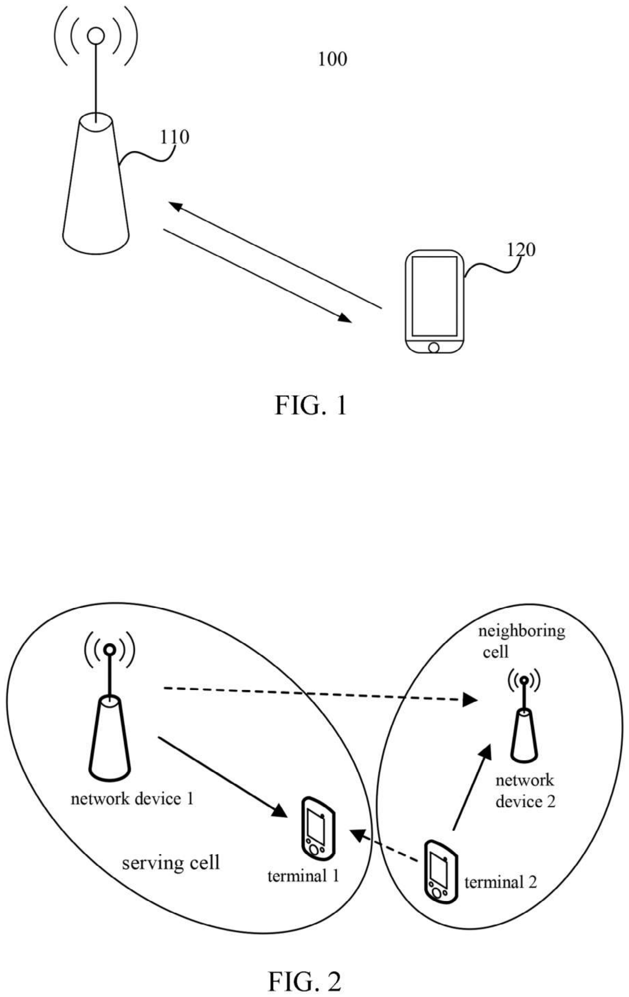

The communication method involved in the present disclosure may be applied to a wireless communication system 100 shown in FIG. 1. The network system may include a network device 110 and a terminal 120. It will be understood that the wireless communication system shown in FIG. 1 is merely for illustrative purposes, and the wireless communication system may also include other network devices, such as a core network device, a wireless relay device, and a wireless backhaul device, etc., which are not shown in FIG. 1. The embodiments of the present disclosure do not limit the number of network device(s) and terminal(s) included in the wireless communication system.

It should be further understood that the wireless communication system of the embodiments of the present disclosure is a network that provides wireless communication function(s). The wireless communication system may employ various communication technologies, such as Code Division Multiple Access (CDMA), Wideband Code Division Multiple Access (WCDMA), Time Division Multiple Access (TDMA), Frequency Division Multiple Access (FDMA), Orthogonal Frequency-Division Multiple Access (OFDMA), Single Carrier-Frequency Division Multiple Access (SC-FDMA), or carrier sense multiple access/collision avoidance (carrier sense multiple access with collision avoidance). Based on factors such as capacity, rate, or latency of different networks, the networks may be categorized as a 2G (generation) network, a 3G network, a 4G network, or a future evolved network, such as the fifth generation wireless communication system (5G) network. The 5G network is also referred to as New Radio (NR). For ease of description, the present disclosure sometimes refers to the wireless communication network as simply a network.

Furthermore, the network device 110 involved in the present disclosure may also be referred to as a wireless access network device. The wireless access network device may be a base station, an evolved base station (evolved node B, eNB), a home base station, an Access Point (AP) in a Wireless Fidelity (WiFi) system, a wireless relay node, a wireless backhaul node, a Transmission Point (TP), or a TRP, etc. It may also be a gNB in an NR system, or a component or part of a device constituting a base station. In a case of a vehicle-to-everything (V2X) communication system, the network device may also be a vehicle-mounted device. It should be understood that the embodiments of the present disclosure do not limit the specific technology and device form employed by the network device.

Furthermore, the terminal 120 involved in the present disclosure may also be referred to as a terminal device, User Equipment (UE), Mobile Station (MS), Mobile Terminal (MT), etc., and is a device that provides voice and/or data connectivity to a user. For example, the terminal may be a handheld device or vehicle-mounted device with a wireless connection function. Currently, some examples of the terminal include: a smart phone (mobile phone), a Pocket Personal Computer (PPC), a handheld computer, a Personal Digital Assistant (PDA), a laptop, a tablet, a wearable device, or a vehicle-mounted device, etc. Furthermore, in a case of a vehicle-to-everything (V2X) communication system, the terminal device may also be a vehicle-mounted device. It should be understood that the embodiments of the present disclosure do not limit the specific technology or device form employed by the terminal.

In the embodiments of the present disclosure, the network device 110 and the terminal 120 may utilize any feasible wireless communication technology to achieve mutual data transmission. A transmission channel corresponding to the transmission of data from the network device 110 to the terminal 120 is called a downlink (DL) channel, and a transmission channel corresponding to the transmission of data from the terminal 120 to the network device 110 is called an UL. It is understood that the network device involved in the embodiments of the present disclosure may be a base station. Of course, the network device may also be any other possible network device, and the terminal may be any possible terminal, and the present disclosure does not impose limitations on this.

In Release (Rel) 18 DTDD scenarios, in order to improve corresponding uplink communication performance, the proportion of corresponding UL transmission slots in a TDD configuration is increased. The DTDD, also known as dynamic TDD, may dynamically adjust the proportions of UL and downlink (DL) transmission slots in a TDD configuration. Assuming that a serving cell and a neighboring cell dynamically adjust the TDD structures in their respective cells differently, this results in inconsistent TDD structures in respective cells, such as inconsistent transmission directions in the two cells, thus causing severe interference.

For example, in the scenario shown in FIG. 2, it can be seen that a serving cell may include a terminal 1 and a network device 1. A neighboring cell adjacent to the serving cell may include a terminal 2 and a network device 2. The TDD structures of the serving cell and the neighboring cell may be inconsistent, and the serving cell and the neighboring cell may perform uplink and downlink transmissions respectively in a certain slot. For example, as shown in FIG. 2, the network device 1 sends downlink data to the terminal 1, and the terminal 2 sends uplink data to the network device 2. The two black solid arrows in FIG. 2 represent different transmission states of different cells at the same time moment. In this case, since the terminal 2 is in an uplink transmission slot, the data sent by the terminal 2 is also transmitted to the terminal 1. The terminal 1 may receive the downlink data sent by the network device 1 and the data sent by the terminal 2 simultaneously, thereby generating ISI. The dotted arrow pointing from the terminal 2 to the terminal 1 in FIG. 2 represents the interference caused by the data sent by the terminal 2 on the terminal 1.

In order to measure the interference between network devices in neighboring cells, Rel-18 Radio Access Network (RAN) 1 supports sending CLI reference signal(s) between different network devices to measure a corresponding interference situation. For example, in some schemes, for Cross Link Interference (CLI) measurement and/or channel measurement of the same channel between network devices, RANI supports at least periodic Non - Zero Power Channel State Information-Reference Signal (NZP CSI -RS) or synchronization signal/physical broadcast channel block (SSB) used for CLI measurement and/or channel measurement between network devices. The SSB may be a Cell Defining (CD) SSB or a Non-Cell Defining (NCD) SSB.

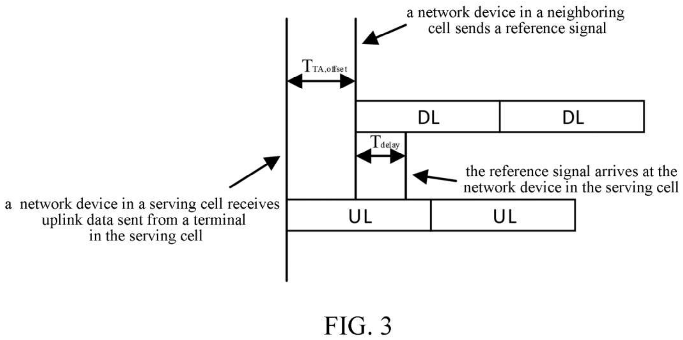

In a scenario, an aggressor network device sends a corresponding Reference Signal (RS), such as a CLI RS, based on scheduling. A serving network device receives the corresponding reference signal. The serving network device is also referred to as a victim network device. The victim network device is a network device in a serving cell, and the aggressor network device is a network device in a neighboring cell. The victim network device receives the CLI RS sent by the aggressor network device to perform a CLI measurement. Considering that the CLI RS only occupies a part of frequency domain resources, in to improve resource utilization efficiency, the victim network device may receive uplink data sent by a terminal in its serving cell at the same time. As shown in FIG. 3, a time interval between the arrival of the CLI RS and UL data is *N*_{*TA,* offset}*T*_{c} + *T*_{delay}, where *N*_{*TA,* offset} is cell-level Timing Advance (TA) information configured for the victim network device, *T*_{c} is a basic time quantity, and *T*_{delay} is a propagation delay of the CLI RS between the victim network device and the aggressor network device. As can be understood, *T*_{*TA,* offset} in FIG. 3 is equal to *N*_{*TA,* offset}*T_{c}*.

In a TDD scenario in Frequency Range (FR) 1, the default value of *N*_{*TA,* offset}*T*_{c} may be 13 microseconds (µs) or 20 µs, depending on whether the frequency band is a Dynamic Spectrum Sharing (DSS) frequency band. In this scenario, when the time difference *N*_{*TA,* offset}*T*_{c} + *T*_{delay} exceeds a Cyclic Prefix (CP) duration, if the victim network device receives the CLI RS and UL data simultaneously, severe ISI interference occurs.

It can be seen that how to avoid the severe ISI interference caused by receiving the CLI RS and UL data simultaneously becomes a problem that needs to be solved.

In some schemes, a zero *N*_{*TA,* offset} scheme is proposed to reduce ISI interference. This is done by configuring the cell-level TA information of the serving cell to be 0, that is, *N*_{*TA,* offset} is configured to be 0, thus ensuring that the UL data in the serving cell and the CLI RS can arrive within the CP duration.

However, *N*_{*TA,* offset} this is primarily defined based on the time for a network device to perform switching between uplink and downlink. If *N*_{*TA,* offset} is configured to be 0, no time is reserved for the network device to perform switching between uplink and downlink. A possible solution is that the network device occupies one or more OFDM symbols before or after the switching between uplink and downlink. On the corresponding occupied OFDM symbol(s), the network device cannot receive and process data sent by a terminal within the serving cell, thus reducing the communication performance of the cell.

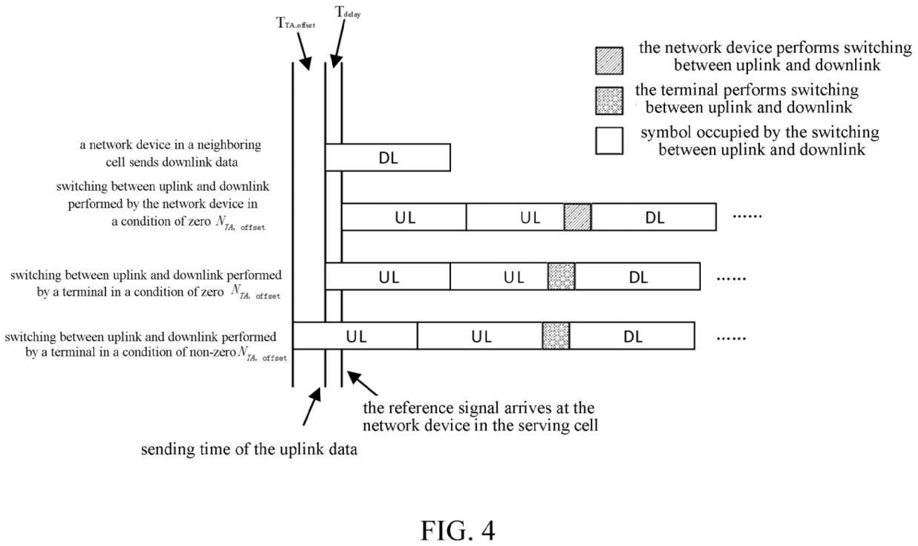

As shown in FIG. 4, assuming that the time for a terminal in the serving cell to send uplink data and the time for the network device in the neighboring cell to send downlink data are aligned, and assuming that the network device in the neighboring cell sends a reference signal based on a downlink symbol time, it needs to take *T*_{delay} for the reference signal to arrive at the network device in the serving cell. In a case that a zero *N*_{*TA,* offset} scheme is employed, if the network device in the serving cell performs the switching between uplink and downlink by occupying the last uplink symbol before the switching between uplink and downlink, the network device cannot receive data sent by the terminal on the uplink symbol. In other words, the network device cannot communicate normally on the uplink symbol, that is, the uplink symbol is unavailable to the network device. As shown in FIG. 4, the shaded area in the second row represents the switching between uplink and downlink, while the gray uplink symbol indicates that a part of the uplink symbol(s) is occupied for the network device to perform the switching between uplink and downlink. From the perspective of the terminal, considering that the same uplink symbol is unavailable to the network device, the terminal generally does not send data. It can be understood that even if the terminal sends data on the uplink symbol occupied by the network device for the switching between uplink and downlink, the network device cannot receive such data. Therefore, the terminal generally does not send data on uplink symbol(s) that are unavailable to the network device.

From another perspective, the terminal also needs to perform switching between uplink and downlink. Therefore, for the terminal, when the terminal in the serving cell adopts the zero *N*_{*TA,* offset} scheme, if the terminal performs switching between uplink and downlink by occupying uplink symbol(s) or downlink symbol(s), the terminal does not perform data transmission on the occupied uplink symbol(s) or downlink symbol(s). That is, it is considered that the occupied uplink symbol(s) or downlink symbol(s) are unavailable to the terminal. Therefore, in some implementations, in order to improve data transmission efficiency, the terminal may expect that the symbol(s) occupied by the network device for switching between uplink and downlink is(are) the same as the symbol(s) occupied by the terminal device for switching between uplink and downlink.

The last row in FIG. 4 shows that the terminal in the serving cell adopts the non-zero *N*_{*TA,* offset} scheme, and the switching between uplink and downlink does not occupy other uplink symbol(s) or downlink symbol(s), and thus the scheme does not affect the terminal's data transmission on different uplink symbol(s) or downlink symbol(s).

Obviously, simply introducing the zero *N*_{*TA,* offset} scheme causes a large number of symbols to be occupied for the network device to perform uplink/downlink switching or downlink/uplink switching, and thus normal communication cannot be performed on the occupied symbol(s), thereby reducing the communication performance of the cell.

Therefore, the present disclosure provides a communication method and apparatus, a device, and a storage medium. Different time windows are determined, a corresponding timing advance is used in a corresponding time window to determine an uplink time unit boundary, and uplink data is sent. In this way, the terminal can adapt to different scenarios, ensuring the interference measurement accuracy while improving the data transmission performance.

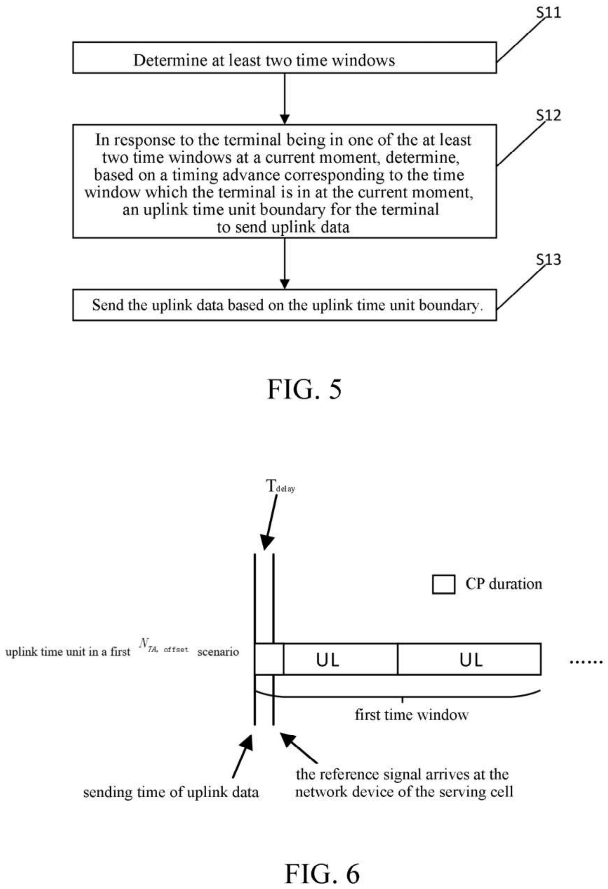

FIG. 5 is a flowchart of a communication method according to an example embodiment. As shown in FIG. 5, the method is performed by a terminal. The method may include the following steps:
In step S11, at least two time windows are determined.

In some embodiments, the terminal may determine at least two time windows.

For example, the terminal may receive configuration information, and the configuration information includes parameter(s) indicating the at least two time windows. According to the received configuration information, the at least two time windows indicated by the configuration information are determined.

For example, the configuration information may configure, for each time window, a time window starting time and a time window duration of the time window, or configure a time window starting time and a time window ending time of the time window. After receiving the configuration information, the terminal may determine each time window according to the time window starting position and the number of time unit(s) included in the time window, or according to the time window starting position and the time window ending position.

The time window duration may be multiple consecutive time units. For example, a time unit may be an OFDM symbol, an OFDM slot, a frame, or a subframe, etc.

For example, the configuration information may include one or more of the following parameter(s) such as: a configuration period, a measurement slot offset or a measurement symbol offset, the number of consecutive slots or symbols for each of the at least two time windows, etc. The terminal may determine each of the at least two time windows based on one or more of the following parameter(s) such as: the configuration period, the measurement slot offset or the measurement symbol offset, the number of consecutive slots or symbols in the configuration information. In some cases, the at least two time windows may include a first time window and a second time window. The first time window may be formed by time unit(s) in which the network device performs interference measurement, or the first time window may be a time window in which a first timing advance is applied; the second time window may be formed by time unit(s) in which the network device does not perform interference measurement, or the second time window may be a time window in which a second timing advance is applied, which is not limited in the present disclosure. The time window in which the first timing advance is applied may be a time window in which the network device performs interference measurement, or a time window in which the network device does not perform interference measurement. The time window in which the second timing advance is applied may be a time window in which the network device performs interference measurement, or a time window in which the network device does not perform interference measurement.

Of course, if the second time window is a time window other than the first time window, the configuration information may only indicate the first time window and implicitly indicate the second time window. The implicit indication of the second time window means that a time window other than the first time window may be determined as the second time window based on the first time window.

For another example, the terminal may determine at least two time windows based on a predefined rule. The predefined rule may predefine the at least two time windows.

For example, the predefined rule predefines N consecutive time units corresponding to each time window of the at least two time windows. The time unit may be an OFDM symbol, an OFDM slot, a frame, or a subframe. Assuming that 10 OFDM slots are a time window, the predefined rule may predefine a starting slot and a duration, or may predefine a starting slot and an ending slot. For example, within the same frame, slot 0 to slot 9 form one time window, and slot 20 to slot 29 form another time window, and so on. Of course, the predefined rule may also define an offset parameter of a time window. Assuming that the offset parameter is 2, within the same frame, slot 2 to slot 11 form one time window, slot 22 to slot 31 form another time window, and so on.

In step S12, in response to the terminal being in one of the at least two time windows at a current moment, an uplink time unit boundary for the terminal to send uplink data is determined based on a timing advance corresponding to the time window which the terminal is in at the current moment.

In some embodiments, the terminal may determine the uplink time unit boundary based on a timing advance corresponding to a specific time window in response to the terminal being in the specific time window. The specific time window is one of the at least two time windows.

For example, each of the at least two time windows may correspond to a timing advance. For example, the timing advance may be expressed as *N*_{*TA,* offset} . Assuming that the at least two time windows include a first time window and a second time window, the first time window may correspond to a first *N*_{*TA,* offset}, and the second time window may correspond to a second *N*_{*TA,* offset} . The terminal may determine the uplink time boundary for sending uplink data based on the specific time window which the terminal is currently in and based on the *N*_{*TA,* offset} corresponding to the specific time window.

The terminal may determine *N*_{*TA,* offset} corresponding to different time windows based on configuration information or a predefined rule.

For example, the configuration information configures multiple *N*_{*TA,* offset}, and configures which time window each *N*_{*TA,* offset} corresponds to. Based on the configuration information, the terminal may determine the *N*_{*TA,* offset} corresponding to each of the at least two time windows. For another example, the terminal may receive configuration information in a corresponding time window, and the *N*_{*TA,* offset} indicated by the configuration information is the *N*_{*TA,* offset} corresponding to the time window. It can be understood that the configuration information for configuring *N*_{*TA,* offset} corresponding to different time windows and the configuration information for configuring the time windows may be configuration information of the same type, such as Radio Resource Control (RRC) signaling, Medium Access Control Control Element (MAC CE) signaling, Downlink Control Information (DCI), etc.

For another example, the predefined rule may predefine the *N*_{*TA,* offset} corresponding to each of the at least two time windows. The terminal determines the *N*_{*TA,* offset} corresponding to different time windows according to the predefined rule.

It can be understood that the specific time window mentioned above may be the first time window or the second time window. That is, when the terminal is in the first time window, the terminal may determine the uplink time boundary based on the first *N*_{*TA,* offset} corresponding to the first time window. Alternatively, when the terminal is in the second time window, the terminal may determine the uplink time boundary based on the second *N*_{*TA,* offset} corresponding to the second time window.

In step S13, the uplink data is sent based on the uplink time unit boundary.

In some embodiments, the terminal sends the uplink data based on the uplink time unit boundary determined in S12.

It can be understood that within a certain time window, the terminal can use the *N*_{*TA,* offset} corresponding to the time window to determine the uplink time unit boundary, and send the uplink data based on the uplink time unit boundary. By configuring different time windows, the terminal in different time window scenarios can adopt an appropriate *N*_{*TA,* offset} to determine an uplink time unit boundary in a corresponding scenario.

In a case that one of the time windows is a time window in which the network device performs interference measurement and the other is a time window in which the network device does not perform interference measurement, ISI interference between uplink data sent by a terminal and a reference signal sent by a network device can be avoided in the time window in which the network device performs the interference measurement, thus ensuring interference measurement accuracy. Furthermore, in the time window in which the network device does not perform the interference measurement, the number of unavailable symbols in the cell can be reduced, thereby improving communication efficiency.

For example, the first time window corresponds to the first *N*_{*TA,* offset}, and the first *N*_{*TA,* offset} may be less than or equal to 0. For example, as shown in FIG. 6, the terminal determines the uplink time unit boundary for sending uplink data based on the first *N*_{*TA,* offset} in the first time window, and the uplink time unit boundary may be a reference time. The reference time may be the time when a network device of the serving cell receives the uplink data, or it may be considered as the time when the network device of the neighboring cell sends the reference signal. Assuming that the time when the terminal in the serving cell sends the uplink data is the reference time, the network device of the serving cell may receive the reference signal sent by the network device of the neighboring cell and the uplink data sent by the terminal in the serving cell within the CP duration. This can avoid ISI interference between the reference signal sent by the network device of the neighboring cell and the uplink data sent by the terminal in the serving cell. As shown in FIG. 6, the reference signal sent by the network device of the neighboring cell and the uplink data sent by the terminal in the serving cell can be received within the gray area. In some cases, the reference signal sent by the neighboring cell may be a reference signal for interference measurement.

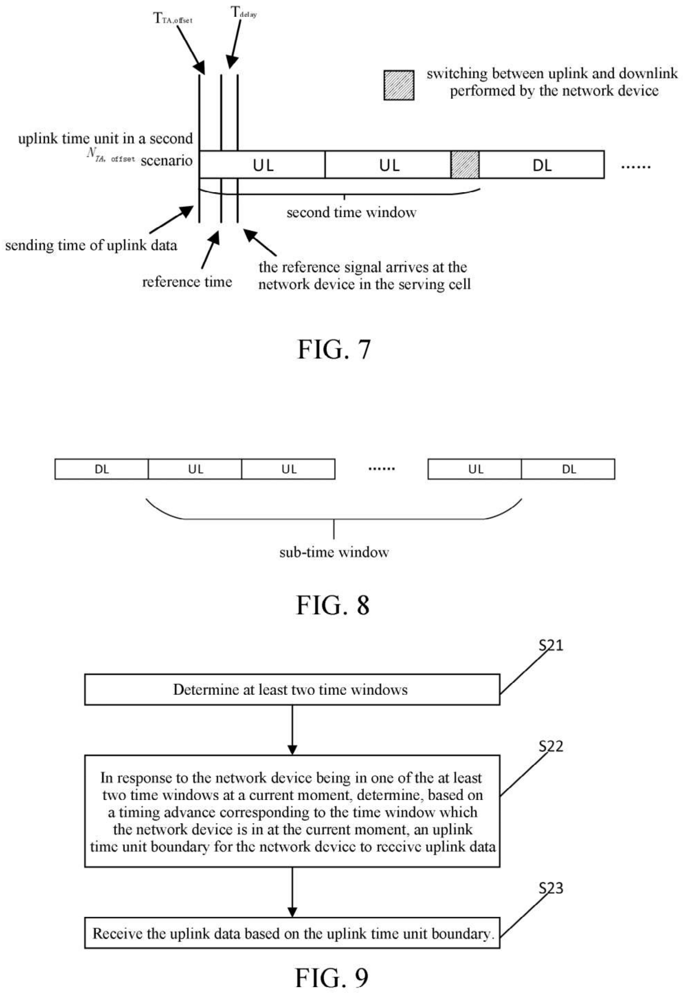

For another example, the second time window corresponds to the second *N*_{*TA,* offset}, and the second *N*_{*TA,* offset} may be greater than 0. For example, as shown in FIG. 7, the terminal determines the uplink time unit boundary for sending uplink data based on the second *N*_{*TA,* offset} in the second time window. It can be seen that the uplink time unit boundary for sending the uplink data by the terminal has a certain delay with respect to the reference time. The delay may be determined based on the second *N*_{*TA,* offset} . In some examples, assuming that the second time window is a time window in which the network device does not perform interference measurement, when the network device performs switching between uplink and downlink, since the uplink symbol is advanced by a certain time length based on the second *N*_{*TA,* offset}, there is also a certain time length between the uplink symbol and the downlink symbol when the switching between uplink and downlink is performed. The network device may use this time period for switching between uplink and downlink, and thus does not need to occupy a certain symbol before or after the switching between uplink and downlink. This reduces the number of symbols occupied for the switching between uplink and downlink and improves the uplink transmission performance.

The present disclosure determines different time windows and uses a corresponding timing advance in a corresponding time window to determine an uplink time unit boundary and send uplink data. The present disclosure enables the terminal to adapt to different scenarios, and can ensure interference measurement accuracy while improving data transmission performance.

In the communication method provided by an embodiment of the present disclosure, the at least two time windows are determined by at least one of the following method(s): receiving first configuration information and determining the at least two time windows based on the first configuration information; or determining the at least two time windows based on a first predefined rule.

In some embodiments, the terminal receives the first configuration information. The first configuration information is used to indicate the at least two time windows. The terminal determines the at least two time windows based on the first configuration information.

For example, for each of the at least two time windows, the first configuration information includes a time window starting position of the time window and the number of time units included in the time window, or the first configuration information configures a time window starting position and a time window ending position for the time window. The terminal may determine each of the at least two time windows based on the above possible parameter(s).

In some embodiments, the terminal may determine the at least two time windows based on a predefined rule.

For example, the predefined rule may predefine that a time window corresponds to N consecutive time units. For example, the predefined rule may predefine a starting position of a time window and the number of time units included in the time window, or the predefined rule may predefine a starting position of a time window and an ending position of the time window. The terminal may determine a corresponding time window based on the starting position of the time window and the number of time units included in the time window, or based on the starting position of the time window and the ending position of the time window defined in the predefined rule, that is, the terminal may determine time domain ranges of different time windows.

In some embodiments, the terminal may determine the at least two time windows based on configuration information and a predefined rule.

For example, if the configuration information received by the terminal only indicates a part of the at least two time windows, the terminal may determine, based on a predefined rule, the time window(s) not indicated in the configuration information.

For example, the at least two time windows include a first time window and a second time window. The terminal receives configuration information, and the configuration information may only indicate the first time window or the second time window. The terminal determines the first time window or the second time window indicated by the configuration information based on the configuration information. If the predefined rule predefines the first time window and/or the second time window, the terminal may also determine, based on the predefined rule, the other time window not configured in the configuration information. Of course, regarding how the configuration information specifically configures the time window(s) and how the predefined rule defines the time window(s), reference can be made to the description in the above embodiments, and repeated descriptions are omitted in the present disclosure.

The present disclosure provides multiple ways to determine time windows, so that a corresponding timing advance can be used in a corresponding time window to determine an uplink time unit boundary and send uplink data. This can enable the terminal to adapt to different scenarios, ensuring interference measurement accuracy while improving data transmission performance.

In the communication method provided by an embodiment of the present disclosure, the first configuration information includes: starting position(s) of the time window(s) and the number of time units included in the time window(s); or, the starting position(s) of the time window(s) and ending position(s) of the time window(s).

In some embodiments, the first configuration information received by the terminal may include the starting position(s) of the time window(s) and the number of time units included in the time window(s).

For example, the network device may configure at least two time windows. For each of the at least two time windows, the network device may configure a starting position of the time window and the number of time units included in the time window. It can be understood that the number of time units included in the time window may be multiple consecutive OFDM symbols, OFDM slots, frames, subframes, etc. The network device may generate the first configuration information. The first configuration information may indicate the starting position(s) of the time window(s) and the number of time units included in the time window(s). The network device sends the first configuration information to the terminal. After receiving the first configuration information, the terminal may determine a corresponding time window based on the starting position of the time window and the number of time units included in the time window indicated in the first configuration information. For example, the terminal determines the corresponding time window with the starting position of the time window as a reference and the number of time units included in the time window as the duration.

In some embodiments, the first configuration information received by the terminal may include the ending position(s) of the time window(s) and the number of time units included in the time window(s).

For example, the network device may configure at least two time windows. For each of the at least two time windows, the network device may configure an ending position of the time window and the number of time units included in the time window. It can be understood that the number of time units included in the time window may be multiple consecutive OFDM symbols, OFDM slots, frames, subframes, etc. The network device may generate the first configuration information. The first configuration information may indicate the ending position(s) of the time window(s) and the number of time units included in the time window(s). The network device sends the first configuration information to the terminal. After receiving the first configuration information, the terminal may determine a corresponding time window based on the ending position of the time window and the number of time units included in the time window indicated in the first configuration information. For example, the terminal determines the corresponding time window by advancing the ending position of the time window, which serves as a reference, by the number of time units included in the time window as the duration.

In some embodiments, the first configuration information received by the terminal may include starting position(s) of the time window(s) and ending position(s) of the time window(s).

For example, the network device may configure at least two time windows. For each of the at least two time windows, the network device may configure a starting position of the time window and an ending position of the time window. The network device may generate the first configuration information. The first configuration information may indicate the starting position(s) of the time window(s) and the ending position(s) of the time window(s). After receiving the first configuration information, the terminal may determine a corresponding time window according to the starting position of the time window and the ending position of the time window indicated in the first configuration information.

The present disclosure provides multiple kinds of possible parameters included in the first configuration information to indicate the at least two time windows, so that a corresponding timing advance can be used in a corresponding time window to determine an uplink time unit boundary and send uplink data. The present disclosure can enable the terminal to adapt to different scenarios, ensuring interference measurement accuracy while improving data transmission performance.

In the communication method provided by an embodiment of the present disclosure, the predefined rule include: predefining starting position(s) of the time window(s) and the number of time units included in the time window(s); or predefining starting position(s) of the time window(s) and ending position(s) of the time window(s).

In some embodiments, the predefined rule may predefine the starting position(s) of the time window(s) and the number of time units included in the time window(s).

For example, the predefined rule may predefine at least two time windows. For each of the at least two time windows, the starting position of the time window and the number of time units included in the time window may be predefined. It can be understood that the number of time units included in the time window may be multiple consecutive OFDM symbols, OFDM slots, frames, subframes, etc. The terminal may determine a starting position of a time window and the number of time units included in the time window based on the predefined rule, and thereby determine the corresponding time window. For example, the terminal may determine the corresponding time window with the starting position of the time window as a reference and the number of time units included in the time window as the duration.

In some embodiments, the predefined rule may predefine the ending position(s) of the time window(s) and the number of time units included in the time window(s).

For example, the predefined rule may predefine at least two time windows. For each of the at least two time windows, an ending position of the time window and the number of time units included in the time window may be predefined. It can be understood that the number of time units included in the time window may be multiple consecutive OFDM symbols, OFDM slots, frames, subframes, etc. The terminal may determine an ending position of a time window and the number of time units included in the time window based on the predefined rule, and thereby determine the corresponding time window. For example, the terminal may determine the corresponding time window with the ending position of the time window as a reference and the number of time units included in the time window as the duration.

In some embodiments, the predefined rule may predefine starting position(s) of the time window(s) and ending position(s) of the time window(s).

For example, the predefined rule may predefine at least two time windows. For each of the at least two time windows, a starting position of the time window and an ending position of the time window may be predefined. The terminal may determine the starting position of the time window and the ending position of the time window based on the predefined rule, and thereby determine the corresponding time window.

The present disclosure provides multiple possible predefined rules to indicate the at least two time windows, so that a corresponding timing advance can be used in a corresponding time window to determine an uplink time unit boundary and send uplink data. The present disclosure can enable the terminal to adapt to different scenarios, ensuring interference measurement accuracy while improving data transmission performance.

In the communication method provided by an embodiment of the present disclosure, at least two time windows include: a first time window; the first time window includes at least one sub-time window, and the sub-time window includes multiple consecutive uplink time units.

In some embodiments, the at least two time windows include a first time window. The first time window includes at least one sub-time window, and the sub-time window includes multiple consecutive uplink time units.

For example, the at least two time windows may include a first time window. In a case, the first time window may be a time window related to the interference measurement performed by the network device, or the first time window may be a time window corresponding to the first *N*_{*TA,* offset}. The time window corresponding to the first *N*_{*TA,* offset} may be a time window related to the interference measurement performed by the network device, or may be a time window in which the network device does not perform interference measurement, which is not limited in the present disclosure.

The first time window may include at least one sub-time window. Therefore, it may also be considered that the sub-time window may be a time window related to interference measurement performed by the network device, or the sub-time window may be a time window corresponding to the first *N*_{*TA,* offset} . The sub-time window may include multiple consecutive uplink time units. In some cases, the multiple consecutive uplink time units may be the maximum number of multiple consecutive uplink time units. The uplink time unit may be, for example, an OFDM symbol, an OFDM slot, a frame, a subframe, etc. The sub-time window including the maximum number of multiple consecutive uplink time units may be considered that adjacent time units outside the sub-time window are not uplink time units. For example, as shown in FIG. 8, the adjacent time units outside the sub-time window are downlink time units, and the uplink time units within the sub-time window are consecutive uplink time units. At the same time, the consecutive uplink time units corresponding to the sub-time window are the maximum number of multiple consecutive uplink time units. Assuming that the number of consecutive uplink time units in FIG. 8 is eight, the sub-time window corresponds to eight consecutive uplink time units.

In some embodiments, the terminal may determine the starting position of the sub-time window and the multiple consecutive uplink time units included in the sub-time window through configuration information. For example, the configuration information indicates a starting position of each sub-time window in at least one sub-time window and multiple consecutive uplink time units included in the corresponding sub-time window. Based on the configuration information, the terminal determines a time domain range corresponding to the sub-time window with the starting position of the sub-time window as a reference and the multiple consecutive uplink time units included in the sub-time window as the duration. Thus, the terminal may use the determined time domain ranges of respective sub-time windows as the time domain range of the first time window.

In some embodiments, the terminal may determine the ending position of the sub-time window and the multiple consecutive uplink time units included in the sub-time window through configuration information. For example, the configuration information indicates the ending position of each sub-time window in at least one sub-time window and the multiple consecutive uplink time units included in the corresponding sub-time window. Based on the configuration information, the terminal determines the time domain range corresponding to the sub-time window by advancing the ending position of the sub-time window, which serves as a reference, by the multiple consecutive uplink time units included in the sub-time window. Thus, the terminal may use the determined time domain ranges of respective sub-time windows as the time domain range of the first time window.

In some embodiments, the terminal may determine the starting position of a sub-time window and an ending position of the sub-time window through configuration information. For example, the configuration information may indicate the starting position and ending position of each sub-time window in at least one sub-time window. Based on the configuration information, the terminal determines a time domain range corresponding to a sub-time window with the starting position of the sub-time window and the ending position of the sub-time window as a reference. Thus, the terminal may use the determined time domain range of each sub-time window as the time domain range of the first time window.

In some embodiments, a predefined rule may predefine a starting position of a sub-time window and multiple consecutive uplink time units included in the sub-time window. For example, based on the predefined rule, the terminal determines the starting position of the sub-time window and the multiple consecutive uplink time units included in the sub-time window. The terminal determines a time domain range corresponding to the sub-time window with the starting position of the sub-time window as a reference and with the multiple consecutive uplink time units included in the sub-time window as a duration. Thus, the terminal may use the determined time domain range of each sub-time window as the time domain range of the first time window.

In some embodiments, the predefined rule may predefine an ending position of a sub-time window and multiple consecutive uplink time units included in the sub-time window. For example, based on the predefined rule, the terminal determines the ending position of the sub-time window and the multiple consecutive uplink time units included in the sub-time window. The terminal determines a time domain range corresponding to the sub-time window by advancing the ending position of the sub-time window, which serves as a reference, multiple consecutive uplink time units included in the sub-time window. Thus, the terminal may use the determined time domain range of each sub-time window as the time domain range of the first time window.

In some embodiments, the predefined rule may predefine a starting position of a sub-time window and an ending position of the sub-time window. For example, based on the predefined rule, the terminal determines the starting position of the time window and the ending position of the sub-time window. The terminal determines the time domain range corresponding to the sub-time window with the starting position of the time window and the ending position of the sub-time window as a reference. Thus, the terminal may use the determined time domain range of each sub-time window as the time domain range of the first time window.

In some embodiments, the first time window may include the number of sub-time windows and a starting sub-time window index offset parameter. For example, assuming that the first time window includes three sub-time windows and the starting sub-time window index offset parameter is 0, the first time window may be {0, 1, 2}, {3, 4, 5}, where 0, 1 and 2 represent sub-time window indexes.

The present disclosure provides an implementation of sub-time window(s) in a first time window. Thus, based on the sub-time window(s), a corresponding timing advance is used in the first time window to determine an uplink time unit boundary and send uplink data. The present disclosure can ensure interference measurement accuracy in the first time window.

In the communication method provided by an embodiment of the present disclosure, the at least two time windows include a first time window. The first time window includes at least one sub-time window, and the sub-time window includes at least one interference measurement time unit.

In some embodiments, the at least two time windows include the first time window. The first time window includes at least one sub-time window. The sub-time window includes at least one interference measurement time unit.

For example, the at least two time windows may include the first time window. In a case, the first time window may be a time window related to interference measurement performed by a network device. The first time window may include at least one sub-time window, and therefore the sub-time window may also be considered as a time window related to interference measurement performed by the network device. The sub-time window may include at least one interference measurement time unit. All time unit(s) in the sub-time window may be interference measurement time unit(s). Alternatively, a part of time unit(s) in the sub-time window may be interference measurement time unit(s). It can be understood that an interference measurement time unit is a time unit used by a network device to perform interference measurement.

It can be understood that when the network device performs the interference measurement, it needs to receive a reference signal for the interference measurement. The time when the reference signal for interference measurement arrives at a network device of a serving cell is often different from the arrival time of uplink data sent by a terminal in the serving cell. Therefore, the network device needs to apply a first timing advance to reduce the ISI interference when the network device receives the reference signal and the uplink data. The present disclosure constitutes the first time window through one or more sub-time windows, and adopts the first timing advance in a time domain range corresponding to the first time window, thereby solving the above-mentioned ISI interference. It can be understood that the first timing advance is also adopted in the time domain range corresponding to each sub-time window.

The present disclosure provides an implementation of sub-time window(s) in the first time window. Thus, based on the sub-time window(s), a corresponding timing advance is used in the first time window to determine an uplink time unit boundary and send uplink data. The present disclosure can ensure interference measurement accuracy in the first time window.

In the communication method provided by an embodiment of the present disclosure, the interference measurement time unit(s) is(are) part or all of multiple consecutive uplink time units in the first time window.

In some embodiments, the interference measurement time unit(s) may be a part of multiple consecutive uplink time units in the first time window. The multiple consecutive uplink time units in the first time window may be the maximum number of consecutive uplink time units in the first time window.

For example, taking the sub-time window shown in FIG. 8 as an example, it is assumed that the sub-time window includes eight consecutive uplink time units. Four uplink time units in the eight consecutive uplink time units may also be interference measurement time units. In a case that the terminal determines the first time window, the terminal may adopt the first *N*_{*TA,* offset} in a part of the time units (such as time units related to interference measurement) in the first time window to determine the uplink time unit boundary for sending uplink data, and send the uplink data.

In some embodiments, the interference measurement time unit(s) may be all of the multiple consecutive uplink time units in the first time window.

For example, taking the sub-time window shown in FIG. 8 as an example, it is assumed that the sub-time window includes eight consecutive uplink time units. All of the eight consecutive uplink time units may also be interference measurement time units. In a case that the terminal determines the first time window, the terminal may adopt the first *N*_{*TA,* offset} in all of the time units (such as time units related to interference measurement) in the first time window to determine the uplink time unit boundary for sending uplink data, and sends the uplink data.

In the present disclosure, a part or all of the time units in the first time window may be interference measurement time unit(s). In the interference measurement time unit(s) in the first time window, a corresponding timing advance is used to determine the uplink time unit boundary and send the uplink data. The present disclosure can ensure interference measurement accuracy in the first time window.

In the communication method provided by an embodiment of the present disclosure, the sub-time window includes a maximum number of multiple consecutive uplink time units.

In some embodiments, the sub-time window may include a maximum number of multiple consecutive uplink time units in the sub-time window.

For example, the terminal may receive configuration information, and the configuration information indicates multiple consecutive uplink time units in a sub-time window, for example, the maximum number of multiple consecutive uplink time units in the sub-time window. The network device may configure the maximum number of multiple consecutive uplink time units in the sub-time window. It can be understood that multiple consecutive uplink time units in the sub-time window may be multiple consecutive OFDM symbols, OFDM slots, frames, subframes, etc. After receiving the configuration information, the terminal may determine the corresponding sub-time window based on the maximum number of multiple consecutive uplink time units in the sub-time window indicated in the configuration information and in combination with the starting position of the sub-time window or the ending position of the sub-time window. For example, the terminal determines the corresponding sub-time window with the starting position of the sub-time window as a reference and multiple consecutive uplink time units as a duration. For another example, the terminal determines the corresponding sub-time window by advancing the ending position of the sub-time window, which serves as a reference, multiple consecutive uplink time units. It can be understood that the terminal may determine the time domain range corresponding to each sub-time window as the time domain range of the first time window.

For another example, a predefined rule may predefine multiple consecutive uplink time units in a sub-time window, for example, the maximum number of multiple consecutive uplink time units in the sub-time window. It can be understood that the maximum number of multiple consecutive uplink time units in the sub-time window may be multiple consecutive OFDM symbols, OFDM slots, frames, subframes, etc. The terminal may determine the maximum number of multiple consecutive uplink time units in the sub-time window according to the predefined rule, and determine the corresponding sub-time window in combination with the starting position of the sub-time window or the ending position of the sub-time window. For example, the terminal determines the corresponding sub-time window with the starting position of the sub-time window as a reference and with multiple consecutive uplink time units as a duration. For another example, the terminal determines the corresponding sub-time window by advancing the ending position of the sub-time window, which serves as a reference, multiple consecutive uplink time units. The terminal may determine the time domain range corresponding to each sub-time window as the time domain range of the first time window.

It should be understood that a next time unit or a previous time unit of the maximum number of multiple consecutive uplink time units in the above embodiments is not an uplink time unit.

The present disclosure can determine the sub-time window based on multiple methods. Thus, a corresponding timing advance can be used in a corresponding sub-time window to determine the uplink time unit boundary and send the uplink data. This can enable the terminal to adapt to different scenarios, ensure interference measurement accuracy, and improve data transmission performance.

In the communication method provided by an embodiment of the present disclosure, the time unit includes any one of: an OFDM symbol; a slot; a frame; or a subframe.

In some embodiments, the time unit may be an OFDM symbol. For example, an uplink time unit may be an uplink OFDM symbol. A downlink time unit may be a downlink OFDM symbol. An interference measurement time unit may be an interference measurement OFDM symbol. The interference measurement OFDM symbol refers to an OFDM symbol used for interference measurement.

In some embodiments, the time unit may be a slot. For example, it may be an OFDM slot. For example, an uplink time unit may be an uplink OFDM slot. A downlink time unit may be a downlink OFDM slot. An interference measurement time unit may be an interference measurement OFDM slot. The interference measurement OFDM slot refers to an OFDM slot used for interference measurement.

In some embodiments, the time unit may be a frame. For example, an uplink time unit may be a frame for uplink transmission. A downlink time unit may be a frame for downlink transmission. An interference measurement time unit may be a frame used for interference measurement.

In some embodiments, the time unit may be a subframe. For example, an uplink time unit may be a subframe for uplink transmission. A downlink time unit may be a subframe for downlink transmission. An interference measurement time unit may be a subframe used for interference measurement.

The present disclosure provides various possible forms of time units, which are also applicable for determining at least two time windows in different scenarios, and a corresponding timing advance may be used in a corresponding time window to determine an uplink time unit boundary and send uplink data. The present disclosure can enable the terminal to adapt to different scenarios, and can ensure interference measurement accuracy and improve data transmission performance.

In the communication method provided by an embodiment of the present disclosure, in response to the time window which the terminal is in at the current moment being the first time window, the terminal does not expect to send an uplink channel or an uplink signal on the last symbol before uplink/downlink switching; and/or, in response to the time window which the terminal is in at the current moment being the first time window, the terminal does not expect to receive a downlink channel or a downlink signal on the first symbol after the uplink/downlink switching; and/or, in response to the time window which the terminal is in at the current moment being the first time window, the terminal does not expect to receive a downlink channel or a downlink signal on the last symbol before downlink/uplink switching; and/or, in response to the time window which the terminal is in at the current moment being the first time window, the terminal does not expect to send an uplink channel or an uplink signal on the first symbol after the downlink/uplink switching.

In some embodiments, in response to the time window which the terminal is in at the current moment being the first time window, the terminal does not expect to send an uplink channel or an uplink signal on the last symbol before the uplink/downlink switching.

For example, if the terminal is in the first time window, the terminal may not expect to send an uplink channel or an uplink signal on the last symbol before the switching from uplink to downlink. In other words, the terminal may not send an uplink channel or an uplink signal on the last symbol before the switching from uplink to downlink. The uplink channel may be, for example, a Physical Uplink Shared Channel (PUSCH) and/or a Physical Uplink Control Channel (PUCCH). The uplink signal may be, for example, a Sounding Reference Signal (SRS).

It can be understood that if the first time window corresponds to a time window for the network device to perform interference measurement, when the first *N*_{*TA,* offset} corresponding to the first time window is less than or equal to 0, the network device needs to perform switching between uplink and downlink by occupying an adjacent symbol before or after the switching. Considering that if the network device performs the switching between uplink and downlink by occupying the last symbol before the switching from uplink to downlink, the network device cannot use this symbol for data reception, and thus the terminal may not send a corresponding channel and/or signal on this symbol.

In some embodiments, in response to the time window which the terminal is in at the current moment being the first time window, the terminal does not expect to receive a downlink channel or a downlink signal on the first symbol after the uplink/downlink switching.

For example, if the terminal is in the first time window, the terminal may not expect to receive a downlink channel or a downlink signal on the first symbol after the switching from uplink to downlink. That is, the terminal may not receive a downlink channel or a downlink signal on the first symbol after the witching from uplink to downlink. Alternatively, the terminal may ignore a downlink channel or a downlink signal that arrives at the terminal on the first symbol after the switching from uplink to downlink. The downlink channel may be, for example, a Physical Downlink Shared Channel (PUSCH) and/or a Physical Downlink Control Channel (PUCCH). The downlink signal may be, for example, a Channel State Information-Reference Signal (CSI-RS).

It can be understood that if the first time window corresponds to a time window for the network device to perform interference measurement, when the first *N*_{*TA,* offset} corresponding to the first time window is less than or equal to 0, the network device needs to perform switching between uplink and downlink by occupying an adjacent symbol before or after the switching. Considering that if the network device performs the switching between uplink and downlink by occupying the first symbol after the switching from uplink to downlink, the network device cannot use this symbol to send data, the terminal may also not receive a corresponding channel and/or signal transmitted on this symbol.

In some embodiments, in response to the time window which the terminal is in at the current moment being the first time window, the terminal does not expect to receive a downlink channel or a downlink signal on the last symbol before downlink/uplink switching.

For example, if the terminal is in the first time window, the terminal may not expect to receive a downlink channel or downlink signal on the last symbol before the switching from downlink to uplink. In other words, the terminal may not receive a downlink channel or downlink signal on the last symbol before the switching from downlink to uplink. Alternatively, the terminal may ignore a downlink channel or downlink signal that arrives at the terminal on the last symbol before the switching from downlink to uplink. The downlink channel may be, for example, a PUSCH and/or a PUCCH. The downlink signal may be, for example, a CSI-RS.

It can be understood that if the first time window corresponds to the time window for the network device to perform interference measurement, when the first *N*_{*TA,* offset} corresponding to the first time window is less than or equal to 0, the network device needs to perform switching between downlink and uplink by occupying an adjacent symbol before or after the switching. Considering that if the network device performs the switching between uplink and downlink by occupying the last symbol before the switching from downlink to uplink, the network device cannot use this symbol to send data, the terminal may also not receive a corresponding channel and/or signal transmitted on this symbol.

In some embodiments, in response to the time window which the terminal is in at the current moment being the first time window, the terminal does not expect to send an uplink channel or an uplink signal on the first symbol after the downlink/uplink switching.

For example, if the terminal is in the first time window, the terminal may not expect to send an uplink channel or uplink signal on the first symbol after the switching from downlink to the uplink. In other words, the terminal may not send an uplink channel or uplink signal on the first symbol after the switching from downlink to uplink. The uplink channel may be, for example, the PUSCH and/or PUCCH. The uplink signal may be, for example, the SRS.

It can be understood that if the first time window corresponds to the time window for the network device to perform interference measurement, when the first *N*_{*TA,* offset} corresponding to the first time window is less than or equal to 0, the network device needs to perform switching between uplink and downlink by occupying an adjacent symbol before or after the switching. Considering that if the network device performs the switching between uplink and downlink by occupying the first symbol after the switching from downlink to uplink, the network device cannot use this symbol for data reception, the terminal may also not send a corresponding channel and/or signal on this symbol.

The terminal in the present disclosure may not send or receive data on a corresponding symbol in the first time window to ensure interference measurement accuracy.

In the communication method provided by an embodiment of the present disclosure, the at least two time windows include a first time window and a second time window. The first time window is a time window corresponding to interference measurement performed by a network device, and the second time window is a time window corresponding to other operation than interference measurement performed by the network device.

In some embodiments, the at least two time windows may include a first time window and a second time window. The first time window is a time window in which the network device performs interference measurement, and the second time window is a time window in which the network device performs other operation than interference measurement. It can be understood that the second time window may also be considered as a time window in which the network device does not perform interference measurement.

For example, the terminal determines, based on configuration information or a predefined rule, a first time window for the network device to perform interference measurement, and determines a second time window in which the network device does not perform interference measurement. Regarding the manner in which the terminal determines the time window based on the configuration information or predefined rule, reference may be made to the description of the corresponding embodiments above, and repeated description will be omitted in the present disclosure.

In the first time window in which the network device performs interference measurement, the terminal may determine an uplink time unit boundary based on a first *N*_{*TA,* offset} associated with the first time window, and send uplink data according to the uplink time unit boundary. Furthermore, in the second time window in which the network device does not perform interference measurement, the terminal may determine an uplink time unit boundary based on a second *N*_{*TA,* offset} associated with the second time window, and send uplink data according to the uplink time unit boundary. Regarding the process for the terminal to determine the *N*_{*TA,* offset} corresponding to different time windows, reference can be made to the description of the corresponding embodiments above, and repeated description will be omitted in the present disclosure.

The present disclosure determines the time window corresponding to interference measurement performed by the network device as well as the time window corresponding to other operation than the interference measurement performed by the network device. A corresponding timing advance can be used in a corresponding time window to determine an uplink time unit boundary and send uplink data. The present disclosure enables the terminal to adapt to different scenarios, ensuring interference measurement accuracy while improving data transmission performance.

In the communication method provided by an embodiment of the present disclosure, the timing advance corresponding to the first time window is less than or equal to 0.

In some embodiments, the first time window may correspond to a first *N*_{*TA,* offset}, and the first *N*_{*TA,* offset} may be less than or equal to zero.

For example, the first *N*_{*TA,* offset} is less than 0. Alternatively, the first *N*_{*TA,* offset} is equal to 0.

It can be understood that when the first *N*_{*TA,* offset} is less than or equal to 0, as shown in FIG. 6, the uplink time unit boundary determined by the terminal in the serving cell based on the first *N*_{*TA,* offset} may be the same as the reference time. This allows the network equipment of the serving cell to receive uplink data sent by the terminal in the serving cell and the reference signal sent by a network device of a neighboring cell within the CP duration. This avoids ISI interference between the uplink data sent by the terminal in the serving cell and the reference signal sent by the network device of the neighboring cell.

In some embodiments, considering that a network device performing switching between uplink and downlink may occupy a certain symbol before or after the switching between uplink and downlink, and thus the network device cannot perform data transmission on the occupied symbol, that is, the symbol is unavailable to the network device. A terminal also needs to perform switching between uplink and downlink. When the terminal adopts the first *N*_{*TA,* offset} in the first time period, the switching between uplink and downlink also occupies a certain symbol before or after the switching between uplink and downlink, resulting in that the terminal cannot perform data transmission on the occupied symbol, that is, the symbol is unavailable to the terminal.

Therefore, in some embodiments, the symbol used by the terminal for switching between uplink and downlink may be configured to be the same as the symbol used by the network device for switching between uplink and downlink. That is, a certain symbol before or after the switching between uplink and downlink occupied by the network device for the switching between uplink and downlink can be the same as a certain symbol before or after the switching between uplink and downlink occupied by the terminal for the switching between uplink and downlink.

In some embodiments, it may be configured that the terminal expects a certain symbol before or after the switching between uplink and downlink occupied for the switching between uplink and downlink to be the same as a certain symbol before or after switching between uplink and downlink occupied by the network device for the switching between uplink and downlink.

Alternatively, in some embodiments, it may be configured that the terminal does not to expect a certain symbol before or after the switching between uplink and downlink occupied for the switching between uplink and downlink to be different from a certain symbol before or after the switching between uplink and downlink occupied by the network device for the switching between uplink and downlink.

The present disclosure provides a more specific first timing advance, so that the first timing advance is used in the first time window to determine the uplink time unit boundary and send uplink data, thereby ensuring interference measurement accuracy.

In the communication method provided by an embodiment of the present disclosure, the timing advance corresponding to the second time window is greater than or equal to 0.

In some embodiments, the second time window may correspond to a second *N*_{*TA,* offset}, and the second *N*_{*TA,* offset} may be greater than or equal to zero.

For example, the second *N*_{*TA,* offset} is greater than 0. Alternatively, the second *N*_{*TA,* offset} is equal to 0.

It can be understood that when the second *N*_{*TA,* offset} is equal to 0, it can be considered that the second *N*_{*TA,* offset} is the same as the first *N*_{*TA,* offset}. Therefore, only one timing advance value can be configured, thereby reducing resource consumption and signaling overhead caused by configuring multiple timing advances.

When the second *N*_{*TA,* offset} is greater than 0, the second *N*_{*TA,* offset} may be the same as usual *N*_{*TA,* offset}. In this case, as shown in FIG. 7, because the uplink time unit boundary is determined based on the second *N*_{*TA,* offset} greater than 0, time is reserved for the network device to perform switching between uplink and downlink. This enables the network device to perform switching between uplink and downlink without occupying a certain symbol before or after the switching between uplink and downlink, effectively avoiding a large number of symbols occupied for switching between uplink and downlink caused by the introduction of zero *N*_{*TA,* offset}. This increases the number of available symbols and improves communication transmission performance.

The present disclosure provides a more specific second timing advance, so that the terminal uses the second timing advance in the second time window to determine the uplink time unit boundary and send uplink data, thereby improving data transmission performance.

Based on the same concept, the present disclosure also provides a communication method performed by a network device.

FIG. 9 is a flowchart of another communication method according to an example embodiment. As shown in FIG. 9, the method is performed by a network device. The method may include the following steps:
In step S21, at least two time windows are determined.

In some embodiments, the network device may determine at least two time windows.

For example, the network device may determine configuration information, and the configuration information includes parameter(s) indicating the at least two time windows.

For example, the configuration information may configure, for each time window, a time window starting position of the time window and the number of time units included in the time window, or configure a time window starting position and a time window ending position of the time window.

A time window duration may be multiple consecutive time units. A time unit may be, for example, an OFDM symbol, an OFDM slot, a frame, or a subframe, etc.

For example, the configuration information may include one or more of the following parameter(s) such as: a configuration period, a measurement slot offset or a measurement symbol offset, the number of continuous slots or symbols for of each time window in the at least two time windows, etc. In some cases, the at least two time windows may include a first time window and a second time window. The first time window may be formed by time unit(s) in which the network device performs interference measurement, or the first time window may be a time window in which a first timing advance is applied; the second time window may be formed by time unit(s) in which the network device does not perform interference measurement, or the second time window may be a time window in which a second timing advance is applied, which is not limited in the present disclosure. The time window in which the first timing advance is applied may be a time window in which the network device performs interference measurement, or a time window in which the network device does not perform interference measurement. The time window in which the second timing advance is applied may be a time window in which the network device performs interference measurement, or a time window in which the network device does not perform interference measurement.

Of course, if the second time window is a time window other than the first time window, the configuration information may only indicate the first time window and implicitly indicate the second time window. The implicit indication of the second time window means that a time window other than the first time window may be determined as the second time window based on the first time window.

For another example, the network device may determine the at least two time windows based on a predefined rule. The predefined rule may predefine the at least two time windows.

For example, the predefined rule predefines N consecutive time units corresponding to each time window of the at least two time windows. The time unit may be an OFDM symbol, an OFDM slot, a frame, or a subframe. Assuming that 10 OFDM slots are a time window, the predefined rules may predefine a starting slot and a duration, or may predefine a starting slot and an ending slot. For example, within the same frame, slot 0 to slot 9 form one time window, slot 20 to slot 29 form another time window, and so on. Of course, the predefined rule may also define an offset parameter of a time window. Assuming the offset parameter is 2, within the same frame, slot 2 to slot 11 form one time window, slot 22 to slot 31 form another time window, and so on.

In step S22, in response to the network device being in one of the at least two time windows at a current moment, an uplink time unit boundary for the network device to receive uplink data is determined based on a timing advance corresponding to the time window which the network device is in at the current moment.

In some embodiments, the network device may determine the uplink time unit boundary based on a timing advance corresponding to a specific time window in response to the network device itself being in the specific time window. The specific time window is one of the at least two time windows.

For example, each of the at least two time windows may correspond to a timing advance, for example, the timing advance may be expressed as *N*_{*TA,* offset} . Assuming that the at least two time windows include a first time window and a second time window, the first time window may correspond to a first *N*_{*TA,* offset}, and the second time window may correspond to a second *N*_{*TA,* offset}. The network device may determine the uplink time boundary for receiving uplink data based on the specific time window which the network device is currently in and based on the *N*_{*TA,* offset} corresponding to the specific time window.

The network device may determine *N*_{*TA,* offset} corresponding to different time windows based on configuration or a predefined rule.

For example, the network device determines configuration information, the configuration information indicates multiple *N*_{*TA,* offset} and configures which time window each *N*_{*TA,* offset} corresponds to. It can be understood that the configuration information for indicating *N*_{*TA,* offset} corresponding to different time windows and the configuration information for indicating the time windows may be configuration information of the same type, such as RRC signaling, MAC CE signaling, DCI, etc.

For another example, the predefined rule may predefine *N*_{*TA,* offset} corresponding to each of the at least two time windows. The network device determines the *N*_{*TA,* offset} corresponding to different time windows according to the predefined rule.

It can be understood that the specific time window mentioned above may be the first time window or the second time window. That is, when the network device is in the first time window, the network device may determine the uplink time boundary based on the first *N*_{*TA,* offset} corresponding to the first time window. Alternatively, when the network device is in the second time window, the network device may determine the uplink time boundary based on the second *N*_{*TA,* offset} corresponding to the second time window.

In step S23, uplink data is received based on the uplink time unit boundary.

In some embodiments, the network device receives uplink data based on the uplink time unit boundary determined in S22.

It can be understood that within a certain time window, the network device can used the *N*_{*TA,* offset} corresponding to the time window to determine the uplink time unit boundary, and receive uplink data based on the uplink time unit boundary. By configuring different time windows, the network device in different time window scenarios can adopt an appropriate *N*_{*TA,* offset} to determine the uplink time unit boundary in a corresponding scenario.

In a case that one of the time windows is a time window in which the network device performs interference measurement and the other is a time window in which the network device does not perform the interference measurement, ISI interference between uplink data sent by a terminal and a reference signal sent by a network device can be avoided in the time window in which the network device performs the interference measurement, thus ensuring interference measurement accuracy. Furthermore, in the time window in which the network device does not perform the interference measurement, the number of unavailable symbols in the cell can be reduced, thereby improving communication efficiency.

For example, the first time window corresponds to the first *N*_{*TA,* offset} , and the first *N*_{*TA,* offset} may be less than or equal to 0. For example, as shown in FIG. 6, the network device determines the uplink time unit boundary for receiving uplink data based on the first *N*_{*TA,* offset} in the first time window, and the uplink time unit boundary may be a reference time. The reference time may be the time when a network device of a neighboring cell sends the reference signal. Assuming that the time when a terminal in the serving cell sends uplink data is also the reference time, the network device of the serving cell may receive the reference signal sent by the network device of the neighboring cell and the uplink data sent by the terminal in the serving cell within the CP duration. This avoids ISI interference between the reference signal sent by the network device of the neighboring cell and the uplink data sent by the terminal in the serving cell. As shown in FIG. 6, the reference signal sent by the network device of the neighboring cell and the uplink data sent by the terminal in the serving cell can be received within the gray area. In some cases, the reference signal sent by the neighboring cell may be a reference signal for interference measurement.

For another example, the second time window corresponds to the second *N*_{*TA,* offset}, and the second *N*_{*TA,* offset} may be greater than 0. For example, as shown in FIG. 7, the network device determines the uplink time unit boundary for receiving uplink data based on the second *N*_{*TA,* offset} in the second time window. It can be seen that the uplink time unit boundary for receiving uplink data by the network device has a certain delay with respect to the reference time. The delay may be determined based on the second *N*_{*TA,* offset} . In some examples, assuming that the second time window is a time window in which the network device does not perform interference measurement, when the network device performs switching between uplink and downlink, since the uplink symbol is advanced by a certain time length based on the second *N*_{*TA,* offset} , there is also a certain time length between the uplink symbol and the downlink symbol when the switching between uplink and downlink is performed. The network device may use this time period for switching between uplink and downlink, and thus does not need to occupy a certain symbol before or after the switching between uplink and downlink. This reduces the number of symbols occupied for the switching uplink and downlink and improves the uplink transmission performance.

The present disclosure determines different time windows and uses a corresponding timing advance in a corresponding time window to determine an uplink time unit boundary and receive uplink data. The present disclosure enables the network device to adapt to different scenarios, and can ensure interference measurement accuracy while improving data transmission performance.

In the communication method provided by an embodiment of the present disclosure, the at least two time windows are determined by at least one of the following method(s): determining the at least two time windows, and sending first configuration information, where the first configuration information is used to indicate the at least two time windows; or determining the at least two time windows based on a first predefined rule.

In some embodiments, the network device determines the at least two time windows, and generates first configuration information used to indicate the at least two time windows. The network device may further send the first configuration information.

For example, for each of the at least two time windows, the first configuration information includes a time window starting position of the time window and the number of time units included in the time window, or the first configuration information configures a time window starting position and a time window ending position for the time window. The network device may configure the above possible parameter(s) to indicate each of the at least two time windows.

In some embodiments, the network device may determine the at least two time windows based on a predefined rule.

For example, the predefined rule may predefine that a time window corresponds to N consecutive time units. For example, the predefined rule may predefine a starting position of a time window and the number of time units included in the time window, or the predefined rule may predefine a starting position of the time window and an ending position of the time window. The network device may determine a corresponding time window based on the starting position of the time window and the number of time units included in the time window, or based on the starting position of the time window and the ending position of the time window defined in the predefined rule. That is, the network device may determine time domain ranges of different time windows.

In some embodiments, the network device may determine the at least two time windows based on configuration and a predefined rule.

For example, the network device configures a part of the at least two time windows. The network device may also determine, based on a predefined rule, time window(s) which are not configured.

For example, the at least two time windows include a first time window and a second time window. The network device determines the first time window or the second time window. If the predefined rule predefines the first time window and/or the second time window, the network device may also determine the other unconfigured time window based on the predefined rule. Of course, regarding how to specifically configure the time window(s) and how the predefined rule defines the time window(s), reference can be made to the description in the above embodiments, and repeated descriptions are omitted in the present disclosure.

The present disclosure provides multiple ways to determine time windows, so that a corresponding timing advance can be used in a corresponding time window to determine an uplink time unit boundary and receive uplink data. This can enable the network equipment to adapt to different scenarios, ensuring interference measurement accuracy while improving data transmission performance.

In the communication method provided by an embodiment of the present disclosure, the first configuration information includes: starting position(s) of the time window(s) and the number of time units included in the time window(s); or, the starting position(s) of the time window(s) and ending position(s) of the time window(s).

In some embodiments, the first configuration information determined by the network device may include the starting position(s) of the time window(s) and the number of time units included in the time window(s).

For example, the network device may configure at least two time windows. For each of the at least two time windows, the network device may configure a starting position of the time window and the number of time units included in the time window. It can be understood that the number of time units included in the time window may be multiple consecutive OFDM symbols, OFDM slots, frames, subframes, etc. The network device may generate the first configuration information. The first configuration information may indicate the starting position(s) of the time window(s) and the number of time units included in the time window(s). The network device may also send the first configuration information to the terminal.

In some embodiments, the first configuration information determined by the network device may include the ending position(s) of the time window(s) and the number of time units included in the time window(s).

For example, the network device may configure at least two time windows. For each of the at least two time windows, the network device may configure an ending position of the time window and the number of time units included in the time window. It can be understood that the number of time units included in the time window may be multiple consecutive OFDM symbols, OFDM slots, frames, subframes, etc. The network device may generate the first configuration information. The first configuration information may indicate the ending position(s) of the time window(s) and the number of time units included in the time window(s). The network device may also send the first configuration information to the terminal.

In some embodiments, the first configuration information determined by the network device may include starting position(s) of the time window(s) and ending position(s) of the time window(s).

For example, the network device may configure at least two time windows, and for each of the at least two time windows, the network device may configure a starting position of the time window and an ending position of the time window. The network device may generate the first configuration information. The first configuration information may indicate the starting position(s) of the time window(s) and the ending position(s) of the time window(s). The network device may also send the first configuration information to the terminal.

The present disclosure provides multiple kinds of possible parameters included in the first configuration information to indicate the at least two time windows, so that a corresponding timing advance can be used in a corresponding time window to determine an uplink time unit boundary and receive uplink data. The present disclosure can enable the network device to adapt to different scenarios, ensuring interference measurement accuracy while improving data transmission performance.

In the communication method provided by an embodiment of the present disclosure, the predefined rule include: predefining starting position(s) of the time window(s) and the number of time units included in the time window(s); or predefining starting position(s) of the time window(s) and ending position(s) of the time window(s).

In some embodiments, the predefined rule may predefine the starting position(s) of the time window(s) and the number of time units included in the time window(s).

For example, the predefined rule may predefine at least two time windows. For each of the at least two time windows, the starting position of the time window and the number of time units included in the time window may be predefined. It can be understood the number of time units included in the time window may be multiple consecutive OFDM symbols, OFDM slots, frames, subframes, etc. The network device may determine a starting position of a time window and the number of time units included in the time window based on the predefined rule, and thereby determine the corresponding time window. For example, the network device may determine the corresponding time window with the starting position of the time window as a reference and the number of time units included in the time window.

In some embodiments, the predefined rule may predefine the ending position(s) of the time window(s) and the number of time units included in the time window(s).

For example, the predefined rule may predefine at least two time windows. For each of the at least two time windows, an ending position of the time window and the number of time units included in the time window may be predefined. It can be understood that the number of time units included in the time window may be multiple consecutive OFDM symbols, OFDM slots, frames, subframes, etc. The network device may determine an ending position of a time window and the number of time units included in the time window based on the predefined rule, and thereby determine the corresponding time window. For example, the network device may determine the corresponding time window with the ending position of the time window as a reference and the number of time units included in the time window.

In some embodiments, the predefined rule may predefine starting position(s) of the time window(s) and ending position(s) of the time window(s).

For example, the predefined rule may predefine at least two time windows, and for each of the at least two time windows, a starting position and an ending position of the time window may be predefined. The network device may determine the starting position of the time window and the ending position of the time window based on the predefined rule, and thereby determine the corresponding time window.

The present disclosure provides multiple possible predefined rules to indicate the at least two time windows, so that a corresponding timing advance can be used in a corresponding time window to determine an uplink time unit boundary and receive uplink data. The present disclosure can enable the network device to adapt to different scenarios, ensuring interference measurement accuracy while improving data transmission performance.

In the communication method provided by an embodiment of the present disclosure, at least two time windows include: a first time window; the first time window includes at least one sub-time window, and the sub-time window includes multiple consecutive uplink time units.

In some embodiments, the at least two time windows include a first time window. The first time window includes at least one sub-time window, and the sub-time window includes multiple consecutive uplink time units.

For example, the at least two time windows may include a first time window. In a case, the first time window may be a time window related to the interference measurement performed by the network device, or the first time window may be a time window corresponding to the first *N*_{*TA,* offset}. The time window corresponding to the first *N*_{*TA,* offset} may be a time window related to the interference measurement performed by the network device, or may be a time window related to the network device not performing interference measurement, which is not limited in the present disclosure.

The first time window may include at least one sub-time window. Therefore, it may also be considered that the sub-time window may be a time window related to interference measurement performed by the network device, or the sub-time window may be a time window corresponding to the first *N*_{*TA,* offset} . The sub-time window may include multiple consecutive uplink time units. In some cases, the multiple consecutive uplink time units may be the maximum number of multiple consecutive uplink time units. The uplink time unit may be, for example, an OFDM symbol, an OFDM slot, a frame, a subframe, etc. The sub-time window including the maximum number of multiple consecutive uplink time units may be considered that the adjacent time units outside the sub-time window(s) are not uplink time units. For example, as shown in FIG. 8, the adjacent time units outside the sub-time window are downlink time units, and the uplink time units within the sub-time window are consecutive uplink time units. At the same time, the consecutive uplink time units corresponding to the sub-time window are the maximum number of multiple consecutive uplink time units. Assuming that the number of consecutive uplink time units in FIG. 8 is eight, the sub-time window corresponds to eight consecutive uplink time units.

In some embodiments, the network device configures the starting position of the sub-time window and the multiple consecutive uplink time units included in the sub-time window. For example, the starting position of each sub-time window in at least one sub-time window and the multiple consecutive uplink time units included in the corresponding sub-time window are configured. The network device determines a time domain range corresponding to the sub-time window with the starting position of the sub-time window as a reference and the multiple consecutive uplink time units included in the sub-time window as the duration. Thus, the network device may use the determined time domain range of each sub-time window as the time domain range of the first time window.

In some embodiments, the network device configures the ending position of the sub-time window and the multiple consecutive uplink time units included in the sub-time window. For example, the ending position of each sub-time window in at least one sub-time window and the multiple consecutive uplink time units included in the corresponding sub-time window are configured. The network device determines the time domain range corresponding to the sub-time window by advancing the ending position of the sub-time window, which serves as a reference, the multiple consecutive uplink time units included in the sub-time window. Thus, the network device may use the determined time domain range of each sub-time window as the time domain range of the first time window.

In some embodiments, the network device configures the starting position of a sub-time window and an ending position of the sub-time window. For example, the network device configures the starting position and ending position of each sub-time window in at least one sub-time window. The network device determines a time domain range corresponding to the sub-time window with the starting position of the sub-time window and the ending position of the sub-time window as a reference. Thus, the network device may use the determined time domain range of each sub-time window as the time domain range of the first time window.

In some embodiments, a predefined rule may predefine a starting position of a sub-time window and the multiple consecutive uplink time units included in the sub-time window. For example, based on the predefined rule, the network device determines the starting position of the sub-time window and the multiple consecutive uplink time units included in the sub-time window. The network device determines a time domain range corresponding to the sub-time window with the starting position of the sub-time window as a reference and with the multiple consecutive uplink time units included in the sub-time window as a duration. Thus, the network device may use the determined time domain range of each sub-time window as the time domain range of the first time window.

In some embodiments, the predefined rule may predefine an ending position of a sub-time window and multiple consecutive uplink time units included in the sub-time window. For example, based on the predefined rule, the network device determines the ending position of the sub-time window and the multiple consecutive uplink time units included in the sub-time window. The network device determines a time domain range corresponding to the sub-time window by advancing the ending position of the sub-time window, which serves as a reference, multiple consecutive uplink time units included in the sub-time window. Thus, the network device may use the determined time domain range of each sub-time window as the time domain range of the first time window.

In some embodiments, the predefined rule may predefine a starting position of a sub-time window and an ending position of the sub-time window. For example, based on the predefined rule, the network device determines the starting position of the time window and the ending position of the sub-time window. The network device determines the time domain range corresponding to the sub-time window with the starting position of the time window and the ending position of the sub-time window as a reference. Thus, the network device may use the determined time domain range of each sub-time window as the time domain range of the first time window.

In some embodiments, the first time window may include the number of sub-time windows and a starting sub-time window index offset parameter. For example, assuming that the first time window includes three sub-time windows and the starting sub-time window index offset parameter is 0, the first time window may be {0, 1, 2}, {3, 4, 5}, where 0, 1 and 2 represent sub-time window indexes.

The present disclosure provides an implementation of sub-time window(s) in a first time window. Thus, based on the sub-time window(s), a corresponding timing advance is used in the first time window to determine an uplink time unit boundary and receive uplink data. The present disclosure can ensure interference measurement accuracy in the first time window.

In the communication method provided by an embodiment of the present disclosure, at least two time windows include: a first time window. The first time window includes at least one sub-time window, and the sub-time window includes at least one interference measurement time unit.

In some embodiments, the at least two time windows include a first time window. The first time window includes at least one sub-time window. The sub-time window includes at least one interference measurement time unit.

For example, the at least two time windows may include a first time window. In a case, the first time window may be a time window related to interference measurement performed by the network device. The first time window may include at least one sub-time window, and therefore the sub-time window may also be considered a time window related to interference measurement performed by the network device. The sub-time window may include at least one interference measurement time unit. All time unit(s) in the sub-time window may be interference measurement time unit(s). Alternatively, a part of time unit(s) in the sub-time window may be interference measurement time unit(s). It can be understood that an interference measurement time unit is a time unit used by the network device to perform interference measurement.

It can be understood that when the network device performs interference measurement, it needs to receive a reference signal for interference measurement. The time when the reference signal for interference measurement arrives at a network device of a serving cell is often different from the arrival time of uplink data sent by a terminal in the serving cell. Therefore, the network device needs to apply a first timing advance to reduce the ISI interference when the network device receives the reference signal and the uplink data. The present disclosure constitutes the first time window through one or more sub-time windows, and adopts the first timing advance in a time domain range corresponding to the first time window, thereby solving the above-mentioned ISI interference. It can be understood that the first timing advance is also adopted in the time domain range corresponding to each sub-time window.

The present disclosure provides an implementation of sub-time window(s) in the first time window. Thus, based on the sub-time window(s), a corresponding timing advance is used in the first time window to determine an uplink time unit boundary and receive uplink data. The present disclosure can ensure interference measurement accuracy in the first time window.

In the communication method provided by an embodiment of the present disclosure, the interference measurement time unit(s) is(are) part or all of multiple consecutive uplink time units in the first time window.

In some embodiments, the interference measurement time unit(s) may be a part of multiple consecutive uplink time units in the first time window. The multiple consecutive uplink time units in the first time window may be the maximum number of consecutive uplink time units in the first time window.

For example, taking the sub-time window shown in FIG. 8 as an example, it is assumed that the sub-time window includes eight consecutive uplink time units. Four uplink time units in the eight consecutive uplink time units may also be interference measurement time units. In a case that the network device determines the first time window, the network device may adopt the first *N*_{*TA,* offset} in a part of the time units (such as time units related to interference measurement) in the first time window to determine the uplink time unit boundary for receiving uplink data, and receive the uplink data.

In some embodiments, the interference measurement time unit(s) may be all of the multiple consecutive uplink time units in the first time window.

For example, taking the sub-time window shown in FIG. 8 as an example, it is assumed that the sub-time window includes eight consecutive uplink time units. All of the eight consecutive uplink time units may also be interference measurement time units. In a case that the network device determines the first time window, the network device may adopt the first *N*_{*TA,* offset} in all of the time units (such as time units related to interference measurement) in the first time window to determine the uplink time unit boundary for receiving uplink data, and receive the uplink data.

In the present disclosure, a part or all of the time units within the first time window may be interference measurement time unit(s). In the interference measurement time unit(s) in the first time window, a corresponding timing advance is used to determine uplink time unit boundary and receive uplink data. The present disclosure can ensure interference measurement accuracy in the first time window.

In the communication method provided by an embodiment of the present disclosure, the sub-time window includes a maximum number of multiple consecutive uplink time units.

In some embodiments, the sub-time window may include a maximum number of multiple consecutive uplink time units in the sub-time window.

For example, the network device may configure multiple consecutive uplink time units in a sub-time window, for example, the maximum number of multiple consecutive uplink time units in the sub-time window. The configuration information indicating the maximum number of multiple consecutive uplink time units in the sub-time window is generated and sent to the terminal. It can be understood that multiple consecutive uplink time units in the sub-time window may be multiple consecutive OFDM symbols, OFDM slots, frames, subframes, etc. The network device may determine the corresponding sub-time window based on the configured maximum number of multiple consecutive uplink time units in the sub-time window and in combination with the starting position of the sub-time window or the ending position of the sub-time window. For example, the network device determines the corresponding sub-time window with the starting position of the sub-time window as a reference and multiple consecutive uplink time units as a duration. For another example, the network device determines the corresponding sub-time window by advancing the ending position of the sub-time window, which serves as a reference, multiple consecutive uplink time units. It can be understood that the network device may determine the time domain range corresponding to each sub-time window as the time domain range of the first time window.

For another example, a predefined rule may predefine multiple consecutive uplink time units in a sub-time window, for example, the maximum number of multiple consecutive uplink time units in the sub-time window. It can be understood that the maximum number of multiple consecutive uplink time units in the sub-time window may be multiple consecutive OFDM symbols, OFDM slots, frames, subframes, etc. The network device may determine the maximum number of multiple consecutive uplink time units in the sub-time window according to the predefined rule, and determine the corresponding sub-time window in combination with the starting position of the sub-time window or the ending position of the sub-time window. For example, the network device determines the corresponding sub-time window with the starting position of the sub-time window as a reference and with multiple consecutive uplink time units as a duration. For another example, the network device determines the corresponding sub-time window by advancing the ending position of the sub-time window, which serves as a reference, multiple consecutive uplink time units. The network device may determine the time domain range corresponding to each sub-time window as the time domain range of the first time window.

It should be understood that a next time unit or a previous time unit of the maximum number of multiple consecutive uplink time units in the above embodiments is not an uplink time unit.

The present disclosure can determine sub-time windows based on multiple methods. Thus, a corresponding timing advance can be used in a corresponding sub-time window to determine the uplink time unit boundary and receive uplink data. This can enable network device to adapt to different scenarios, ensure ensuring interference measurement accuracy, and improve data transmission performance.

In the communication method provided by an embodiment of the present disclosure, the time unit includes any one of: an OFDM symbol; a slot; a frame; or a subframe.

In some embodiments, the time unit may be an OFDM symbol. For example, an uplink time unit may be an uplink OFDM symbol. A downlink time unit may be a downlink OFDM symbol. An interference measurement time unit may be an interference measurement OFDM symbol. The interference measurement OFDM symbol is an OFDM symbol used for interference measurement.

In some embodiments, the time unit may be a slot. For example, it may be an OFDM slot. For example, an uplink time unit may be an uplink OFDM slot. A downlink time unit may be a downlink OFDM slot. An interference measurement time unit may be an interference measurement OFDM slot. The interference measurement OFDM slot refers to an OFDM slot used for interference measurement.

In some embodiments, the time unit may be a frame. For example, An uplink time unit may be a frame for uplink transmission. A downlink time unit may be a frame for downlink transmission. An interference measurement time unit may be a frame used for interference measurement.

In some embodiments, the time unit may be a subframe. For example, an uplink time unit may be a subframe for uplink transmission. A downlink time unit may be a subframe for downlink transmission. An interference measurement time unit may be a subframe used for interference measurement.

The present disclosure provides various possible forms of time units, which are also applicable for determining at least two time windows in different scenarios, and a corresponding timing advance may be used in a corresponding time window to determine an uplink time unit boundary and to receive uplink data. The present disclosure enables the network device to adapt to different scenarios, ensuring interference measurement accuracy while improving data transmission performance.

In the communication method provided by an embodiment of the present disclosure, in response to the time window which the network device is in at the current moment being the first time window, the network device does not expect to receive an uplink channel or an uplink signal from the terminal on the last symbol before the uplink/downlink switching; and/or, in response to the time window which the network device is in at the current moment being the first time window, the network device does not expect to send a downlink channel or a downlink signal to the terminal on the first symbol after the uplink/downlink switching; and/or, in response to the time window which the network device is in at the current moment being the first time window, the network device does not expect to send a downlink channel or a downlink signal to the terminal on the last symbol before the downlink/uplink switching; and/or, in response to the time window which the network device is in at the current moment being the first time window, the network device does not expect to receive an uplink channel or an uplink signal from the terminal on the first symbol after the downlink/uplink switching.

In some embodiments, in response to the time window which the network device is in at the current moment being the first time window, the network device does not expect to receive an uplink channel or an uplink signal from the terminal on the last symbol before the uplink/downlink switching.

For example, if the network device is in the first time window, the network device may not expect to receive an uplink channel or uplink signal from the terminal on the last symbol before the switching from uplink to downlink. In other words, the network device may not receive an uplink channel or uplink signal on the last symbol before the switching from uplink to downlink. Alternatively, the network device may ignore an uplink channel or uplink signal received from the terminal on the last symbol before the switching from uplink to downlink. The uplink channel may be, for example, PUSCH and/or PUCCH. The uplink signal may be, for example, SRS.

It can be understood that if the first time window corresponds to a time window for the network device to perform interference measurement, when the first *N*_{*TA,* offset} corresponding to the first time window is less than or equal to 0, the network device needs to perform switching between uplink and downlink by occupying an adjacent symbol before or after the switching. Considering that the network device performs the switching between uplink and downlink by occupying the last symbol before the switching from uplink to downlink, the network device cannot use the symbol to perform data reception.

In some embodiments, in response to the time window which the network device is in at the current moment being the first time window, the network device does not expect to send a downlink channel or a downlink signal to the terminal on the first symbol after the uplink/downlink switching.

For example, if the network device is in the first time window, the network device may not expect to send a downlink channel or downlink signal to the terminal on the first symbol after the switching from uplink to downlink. In other words, the network device may not send a downlink channel or downlink signal on the first symbol after the switching from uplink to downlink. The downlink channel may be, for example, the PUSCH and/or PUCCH. The downlink signal may be, for example, the CSI-RS.

It can be understood that if the first time window corresponds to a time window for the network device to perform interference measurement, when the first *N*_{*TA,* offset} corresponding to the first time window is less than or equal to 0, the network device needs to perform switching between uplink and downlink by occupying an adjacent symbol before or after the switching. Considering that the network device performs the switching between uplink and downlink by occupying the first symbol after the switching from uplink to downlink, the network device cannot use the symbol to send data.

In some embodiments, in response to the time window which the network device is in at the current moment being the first time window, the network device does not expect to send a downlink channel or a downlink signal to the terminal on the last symbol before the downlink/uplink switching.

For example, if the network device is in the first time window, the network device may not expect to send a downlink channel or downlink signal to the terminal on the last symbol before the switching from downlink to uplink. In other words, the network device may not send a downlink channel or downlink signal on the last symbol before the switching from downlink to uplink. The downlink channel may be, for example, the PUSCH and/or PUCCH. The downlink signal may be, for example, the CSI-RS.

It can be understood that if the first time window corresponds to a time window for the network device to perform interference measurement, when the first *N*_{*TA,* offset} corresponding to the first time window is less than or equal to 0, the network device needs to perform switching between downlink and uplink by occupying an adjacent symbol before or after the switching. Considering that the network device performs the switching between uplink and downlink by occupying the last symbol before the switching from downlink to uplink, the network device cannot use this symbol to send data.

In some embodiments, in response to the time window which the network device is in at the current moment being the first time window, the network device does not expect to receive an uplink channel or an uplink signal from the terminal on the first symbol after the downlink/uplink switching.

For example, if the network device is in the first time window, the network device may not expect to receive an uplink channel or uplink signal from the terminal on the first symbol after the switching from downlink to the uplink. In other words, the network device may not receive an uplink channel or uplink signal on the first symbol after the switching from downlink to the uplink. Alternatively, the network device may ignore an received uplink channel or uplink signal from the terminal on the first symbol after the switching from downlink to the uplink. The uplink channel may be, for example, PUSCH and/or PUCCH. The uplink signal may be, for example, SRS.

It can be understood that if the first time window corresponds to a time window for the network device to perform interference measurement, when the first *N*_{*TA,* offset} corresponding to the first time window is less than or equal to 0, the network device needs to perform switching between uplink and downlink by occupying an adjacent symbol before or after the switching. Considering that the network device performs the switching between uplink and downlink by occupying the first symbol after the switching from downlink to uplink, the network device cannot use this symbol for data reception.

The terminal in the present disclosure may not send or receive data on a corresponding symbol in the first time window to ensure interference measurement accuracy.

In the communication method provided by an embodiment of the present disclosure, at least two time windows include a first time window and a second time window, the first time window is a time window in which the network device performs interference measurement, and the second time window is a time window in which the network device performs other operation than interference measurement.

In some embodiments, the at least two time windows may include a first time window and a second time window. The first time window is a time window in which the network device performs interference measurement, and the second time window is a time window in which the network device performs other operation than interference measurement. It can be understood that the second time window may also be considered a time window in which the network device does not perform interference measurement.

For example, the network device determines configuration information or determines, based on a predefined rule, a first time window in which the network device performs interference measurement, and determines a second time window in which the network device does not perform interference measurement. Regarding the manner in which the network device determines configuration information or determines the time window based on the predefined rule, reference can be made to the description of the corresponding embodiments above, and repeated descriptions will be omitted in the present disclosure.

In the first time window in which the network device performs interference measurement, the network device may determine an uplink time unit boundary based on a first *N*_{*TA,* offset} associated with the first time window, and receive uplink data based on the uplink time unit boundary. Furthermore, in the second time window in which the network device does not perform interference measurement, the network device may determine an uplink time unit boundary based on a second *N*_{*TA,* offset} associated with the second time window, and receive uplink data based on the uplink time unit boundary. Regarding the process for the network device to determine *N*_{*TA,* offset} corresponding to different time windows, reference can be made to the description of the corresponding embodiments above, and repeated descriptions will be omitted in the present disclosure.

The present disclosure determines the corresponding time window for the network device to perform interference measurements, as well as the corresponding time window for the network device to perform other operation than interference measurement. A corresponding timing advance may be used in a corresponding time window to determine an uplink time unit boundary and receive uplink data. The present disclosure enables the network device to adapt to different scenarios, ensuring interference measurement accuracy while improving data transmission performance.

In the communication method provided by an embodiment of the present disclosure, a timing advance corresponding to the first time window is less than or equal to 0.

In some embodiments, the first time window may correspond to a first *N*_{*TA,* offset} , and the first *N*_{*TA,* offset} may be less than or equal to zero.

For example, the first *N*_{*TA,* offset} is less than 0. Alternatively, the first *N*_{*TA,* offset} is equal to 0.

It can be understood that when the first *N*_{*TA,* offset} is less than or equal to 0, as shown in FIG. 9, the uplink time unit boundary determined by the network device of the serving cell based on the first *N*_{*TA,* offset} may be the same as the reference time. This allows the network device of the serving cell to receive uplink data sent by the terminal in the serving cell and the reference signal sent by a network device of a neighboring cell within the CP duration. This avoids ISI interference between the uplink data sent by the terminal in the serving cell and the reference signal sent by the network device of the neighboring cell.

In some embodiments, considering that a network device performing switching between uplink and downlink may occupy a certain symbol before or after the switching between uplink and downlink, and thus the network device cannot perform data transmission on the occupied symbol, that is, the symbol is unavailable to the network device. A terminal also needs to perform switching between uplink and downlink. When the terminal adopts the first *N*_{*TA,* offset} in the first time period, the switching between uplink and downlink also occupies a certain symbol before or after the switching between uplink and downlink, resulting in that the terminal cannot perform data transmission on the occupied symbol, that is, the symbol is unavailable to the terminal.

Therefore, in some embodiments, the symbol used by the terminal for switching between uplink and downlink may be configured to be the same as the symbol used by the network device for switching between uplink and downlink. That is, a certain symbol before or after the switching between uplink and downlink occupied by the network device for the switching between uplink and downlink can be the same as a certain symbol before or after the switching between uplink and downlink occupied by the terminal for the switching between uplink and downlink.

In some embodiments, it may be configured that the terminal expects a certain symbol before or after the switching between uplink and downlink occupied for the switching between uplink and downlink to be the same as a certain symbol before or after switching between uplink and downlink occupied by the network device for the switching between uplink and downlink.

Alternatively, in some embodiments, it may be configured that the terminal does not to expect a certain symbol before or after the switching between uplink and downlink occupied for the switching between uplink and downlink to be different from a certain symbol before or after the switching between uplink and downlink occupied by the network device for the switching between uplink and downlink.

The present disclosure provides a more specific first timing advance, so that the first timing advance is used in the first time window to determine the uplink time unit boundary and send uplink data, thereby ensuring interference measurement accuracy.

In the communication method provided by an embodiment of the present disclosure, the timing advance corresponding to the second time window is greater than or equal to 0.

In some embodiments, the second time window may correspond to a second *N*_{*TA,* offset}, and the second *N*_{*TA,* offset} may be greater than or equal to zero.

For example, the second *N*_{*TA,* offset} is greater than 0. Alternatively, the second *N*_{*TA,* offset} is equal to 0.

It can be understood that when the second *N*_{*TA,* offset} is equal to 0, it can be considered that the second *N*_{*TA,* offset} is the same as the first *N*_{*TA,* offset} . Therefore, only one timing advance value can be configured, thereby reducing resource consumption and signaling overhead caused by configuring multiple timing advances.

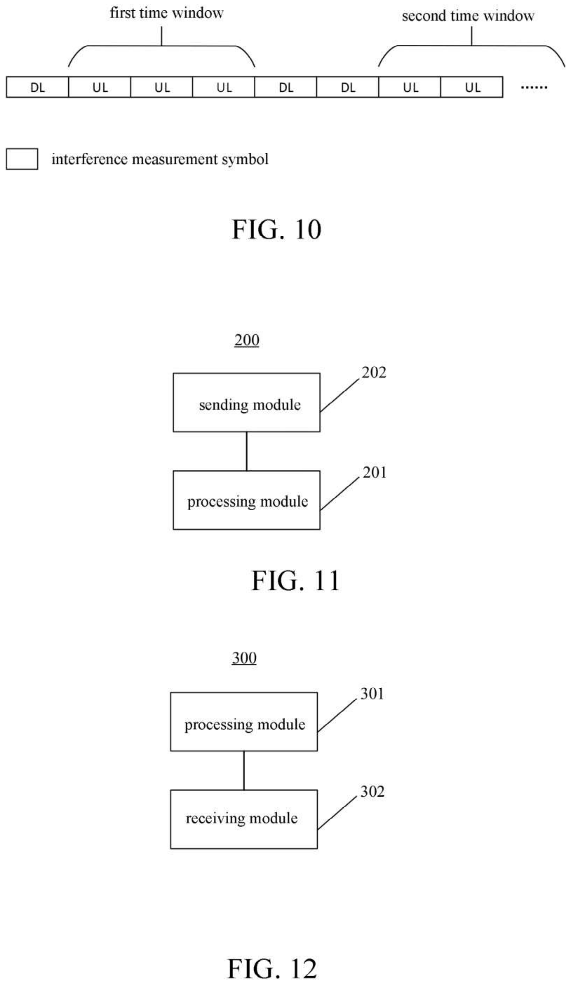

When the second *N*_{*TA,* offset} value is greater than 0, the second *N*_{*TA,* offset} may be the same as usual *N*_{*TA,* offset} . In this case, as shown in FIG. 10, because the uplink time unit boundary is determined based on the second *N*_{*TA,* offset} greater than 0, time is reserved for the network device to perform switching between uplink and downlink. This enables the network device to perform switching between uplink and downlink without occupying a certain symbol before or after the switching between uplink and downlink, effectively avoiding a large number of symbols occupied for switching between uplink and downlink caused by the introduction of zero *N*_{*TA,* offset}. This increases the number of available symbols and improves communication transmission performance.

The present disclosure provides a more specific second timing advance, so that the terminal uses the second timing advance in the second time window to determine the uplink time unit boundary and send uplink data, thereby improving data transmission performance.

Next, the solutions involved in the present disclosure will be described based on more specific embodiments.

At the terminal side: the terminal determines time windows corresponding to different *N*_{*TA,* offset} based on the following method and transmits corresponding data:
In some embodiments, the terminal determines corresponding time windows in which two *N*_{*TA,* offset} are applied based on the following method:
In some embodiments, the terminal applies the first *N*_{*TA,* offset} in a DTDD time window and applies the second *N*_{*TA,* offset} in a non-DTDD time window. It can be understood that the DTDD time window may be considered as a time window in which the network device performs interference measurement, and the non-DTDD time window may be considered as a time window in which the network device does not perform interference measurement.

In some embodiments, the terminal determines the time windows based on a predefined method. As an example, the DTDD time window includes at least one sub-time window. The sub-time window includes a maximum number of consecutive UL OFDM symbols before UL/DL switching. The sub-time window also includes at least one CLI symbol. A non-DTDD time window corresponds to a time domain range outside the time domain range of the DTDD time window.

In some embodiments, the terminal determines the DTDD time window based on a configuration, for example, based on cell-specific RRC signaling.

In some embodiments, in the DTDD time window, the terminal does not expect to send PUSCH/PUCCH/SRS on the last symbol of U/D switching, or does not expect to receive PDSCH/PDCCH/CSI-RS on the first symbol of U/D switching.

At the network device side: the network device determines time windows corresponding to different *N*_{*TA,* offset} based on the following method and performs corresponding data transmission:
In some embodiments, the network device determines corresponding time windows in which two *N*_{*TA,* offset} are applied based on the following method:
In some embodiments, the network device applies the first *N*_{*TA,* offset} in the DTDD time window and applies the second *N*_{*TA,* offset} in the non-DTDD time window.

In some embodiments, the network device determines the time windows based on a predefined method. As an example, the DTDD time window includes at least one sub-time window. The sub-time window includes the maximum number of consecutive UL OFDM symbols before the UL/DL switching, and the sub-time window includes at least one CLI symbol. The non-DTDD time window corresponds to a time domain range outside the time domain range of the DTDD time window.

In some embodiments, the network device determines the DTDD time window based on a configuration, for example, based on cell-specific RRC signaling.

In some embodiments, in the DTDD time window, the network device abandons receiving PUSCH/PUCCH/SRS on the last symbol of U/D switching, or abandons sending PDSCH/PDCCH/CSI-RS on the first symbol of U/D switching.

The following describes the specific implementation of the present disclosure from the perspective of the terminal:
Assuming that the terminal is a Rel-18 or later version terminal and the terminal is a terminal that supports the DTDD feature (Rel-18 DTDD terminal), the terminal performs corresponding CLI measurement and reporting at a corresponding time-frequency domain position based on a configuration of the network device.

Under the existing mechanism, *N*_{*TA,* offset} is a cell-level parameter, and all terminals in the same serving cell correspond to the same *N*_{*TA,* offset} . A corresponding terminal, i.e., a terminal supporting the Rel-18 DTDD feature, supports two *N*_{*TA,* offset} .

The terminal determines two *N*_{*TA,* offset} (for example, the first *N*_{*TA,* offset} and second *N*_{*TA,* offset} ) based on a predefined method and/or a signaling configuration method.

The terminal determines a time window corresponding to DTDD (a first time window) and a time window corresponding to non-DTDD (a second time window), applies the first *N*_{*TA,* offset} (e.g., *N*_{*TA,* offset} =0, or *N*_{*TA,* offset} < 0) in the first time window, and applies the second *N*_{*TA,* offset} in the second time window.

Method 1: the first time window is determined based on a predefined method. As an example, the first time window includes N (N ≥ 1) sub-time windows, and each sub-time window is formed by a maximum number of consecutive UL OFDM symbols that do not include UL/DL switching or DL/UL switching. Considering that the first time window is mainly used for the CLI measurement between network devices, the first time window includes at least one CLI symbol, and/or each sub-time window includes at least one CLI symbol. The CLI symbol is used for the network device to receive a CLI RS and perform the CLI measurement between the network devices.

Method 2: the terminal receives indication signaling and determines the first time window. The indication signaling may be one or more of: RRC, MAC CE, DCI. The indication signaling includes but is not limited to: a period, a slot and/or OFDM symbol offset, a time window duration.

The terminal determines the second time window based on the scheme in method 1 and/or method 2, or determines the second time window based on the first time window. The second time window is continuous with the first time window in the time domain and has no intersection with the first time window in the time domain, and the second time window does not include the CLI symbol.

For example, as shown in FIG. 10, the maximum number of consecutive uplink time units including the interference measurement symbol may be the first time window, and the maximum number of consecutive uplink time units not including the interference measurement symbol may be the second time window.

The terminal applies the first *N*_{*TA,* offset} in the first time window, and the first *N*_{*TA,* offset} may be equal to 0 or less than 0. Considering that *N*_{*TA,* offset} includes the time for the network device to perform UL/DL switching or DL/UL switching, if the applied first *N*_{*TA,* offset} is equal to 0 or less than 0, the network device can only occupy the last OFDM symbol before the UL/DL switching or the first OFDM symbol after the UL/DL switching when performing the UL/DL switching. During the UL/DL switching performed by the network device, the network device cannot perform data transmission. Based on this, in the first time window, the terminal does not expect to send PUSCH/PUCCH/SRS on the last symbol of the UL/DL switching, or does not expect to receive PDSCH/PDCCH/CSI-RS on the first symbol after the UL/DL switching. And/or, in the first time window, the terminal does not expect to receive PDSCH/PDCCH/CSI-RS on the last symbol of the DL/UL switching, or does not expect to send PUSCH/PUCCH/SRS on the first symbol of the DL/UL switching.

The embodiments of the present disclosure mainly consider defining time windows in which different *N*_{*TA,* offset} is applied under the condition that two *N*_{*TA,* offset} is introduced. This is beneficial for improving data transmission efficiency while ensuring gNB CLI measurement accuracy.

It should be noted that those skilled in the art will appreciate that the various implementations/embodiments involved in the embodiments of the present disclosure can be used in conjunction with the aforementioned embodiments or can be used independently. Whether used independently or in conjunction with the aforementioned embodiments, the implementation principles are similar. In the implementations of the present disclosure, a part of embodiments are described using examples in which the implementations are used together. Of course, those skilled in the art will appreciate that such examples are not limitations on the embodiments of the present disclosure.

Based on the same concept, embodiments of the present disclosure also provide a communication apparatus and device.

It can be understood that in order to realize the above functions, the communication apparatus and device provided by the embodiments of the present disclosure include hardware structure(s) and/or software module(s) corresponding to the execution of each function. In combination with the unit(s) and algorithm step(s) of each example disclosed in the embodiments of the present disclosure, the embodiments of the present disclosure can be implemented in the form of hardware or a combination of hardware and computer software. Whether a function is implemented in the form of hardware or computer software driving hardware depends on a specific application and design constraints of the technical solutions. Those skilled in the art can use different methods to implement the described functions for each specific application, but such implementation should not be considered as beyond the scope of the technical solutions of the embodiments of the present disclosure.

FIG. 11 is a schematic diagram of a communications apparatus according to an example embodiment. Referring to FIG. 11, the apparatus 200 includes: a processing module 201 configured to determine at least two time windows. The processing module 201 is further configured to, in response to a terminal being in one of the at least two time windows at a current moment, determine an uplink time unit boundary for the terminal to send uplink data based on a timing advance corresponding to the time window which the terminal is in at the current moment. The specific time window is one of the at least two time windows. A sending module 202 is configured to send the uplink data based on the uplink time unit boundary.

The present disclosure determines different time windows and uses a corresponding time advance in a corresponding time window to determine the uplink time unit boundary and send uplink data. The present disclosure can enable the terminal to adapt to different scenarios, ensure interference measurement accuracy, and improve data transmission performance.

In some embodiments, the at least two time windows are determined by at least one of the following method(s): receiving first configuration information, and determining the at least two time windows based on the first configuration information; or determining the at least two time windows based on a predefined rule.

The present disclosure provides multiple ways to determine the time windows, so that a corresponding timing advance can be used in a corresponding time window to determine the uplink time unit boundary and send uplink data. The present disclosure can enable the terminal to adapt to different scenarios, can ensure interference measurement accuracy while improving data transmission performance.

In some embodiments, the first configuration information includes: a starting position of the time window and the number of time units included in the time window; or the starting position of the time window and an ending position of the time window.

The present disclosure provides multiple possible parameters included in the first configuration information to indicate the at least two time windows, so that a corresponding timing advance can be used in a corresponding time window to determine the uplink time unit boundary and send uplink data. The present disclosure can enable the terminal to adapt to different scenarios, and can ensure interference measurement accuracy while improving data transmission performance.

In some embodiments, the predefined rules include predefining a starting position of the time window and the number of time units included in the time window; or predefining the starting position of the time window and an ending position of the time window.

The present disclosure provides multiple possible predefined rules to indicate the at least two time windows, so that a corresponding timing advance can be used in a corresponding time window to determine uplink time unit boundary and send uplink data. The present disclosure can enable the terminal to adapt to different scenarios, and can ensure interference measurement accuracy while improving data transmission performance.

In some embodiments, the at least two time windows include a first time window; the first time window includes at least one sub-time window, and the sub-time window includes multiple consecutive uplink time units.

The present disclosure provides an implementation of the sub-time window(s) in the first time window, so that based on the sub-time window(s), the uplink time unit boundary is determined by using a corresponding timing advance in the first time window and uplink data is sent. Thus, the present disclosure can ensure the interference measurement accuracy in the first time window.

In some embodiments, the at least two time windows include a first time window; the first time window includes at least one sub-time window, and the sub-time window includes at least one interference measurement time unit.

The present disclosure provides an implementation of the sub-time window(s) in the first time window, so that based on the sub-time window(s), an uplink time unit boundary is determined by using a corresponding timing advance in the first time window and uplink data is sent. Thus, the present disclosure can ensure interference measurement accuracy in the first time window.

In some implementations, the interference measurement time unit(s) is(are) part or all of multiple consecutive uplink time units in the first time window.

In the present disclosure, part or all of the time units in the first time window may be interference measurement time unit(s). On the interference measurement time unit(s) in the first time window, a corresponding timing advance is used to determine an uplink time unit boundary and send uplink data. The present disclosure can ensure the interference measurement accuracy in the first time window.

In some implementations, the sub-time window includes a maximum number of multiple consecutive uplink time units.

The present disclosure can determine the sub-time window based on multiple methods, so that a corresponding timing advance can be used in a corresponding sub-time window to determine the uplink time unit boundary and send uplink data. The present disclosure can enable the terminal to adapt to different scenarios, can ensure the interference measurement accuracy, and improve data transmission performance.

In some embodiments, the time unit includes any one of the following: an OFDM symbol; a slot; a frame; or a subframe.

The present disclosure provides various possible forms of the time units, which are also applicable for determining at least two time windows in different scenarios, and a corresponding timing advance may be used in a corresponding time window to determine an uplink time unit boundary and send uplink data. The present disclosure can enable the terminal to adapt to different scenarios, and can ensure interference measurement accuracy and improve data transmission performance.

In some embodiments, in response to the time window which the terminal is in at the current moment being the first time window, the terminal does not expect to send an uplink channel or an uplink signal on the last symbol before uplink/downlink switching; and/or, in response to the time window which the terminal is in at the current moment being the first time window, the terminal does not expect to receive a downlink channel or a downlink signal on the first symbol after the uplink/downlink switching; and/or, in response to the time window which the terminal is in at the current moment being the first time window, the terminal does not expect to receive a downlink channel or a downlink signal on the last symbol before the downlink/uplink switching; and/or, in response to the time window which the terminal is in at the current moment being the first time window, the terminal does not expect to send an uplink channel or an uplink signal on the first symbol after the downlink/uplink switching.

The terminal in the present disclosure may not send or receive data on a corresponding symbol within the first time window to ensure the interference measurement accuracy.

In some implementations, the at least two time windows include a first time window and a second time window. The first time window is a time window corresponding to interference measurement performed by the network device, and the second time window is a time window corresponding to other operation than the interference measurement performed by the network device.

The present disclosure determines the time window corresponding to the interference measurement performed by the network device, as well as the time window corresponding to other operation than the interference measurement performed by the network device. Thus, a corresponding timing advance can be used in a corresponding time windows to determine an uplink time unit boundary and send uplink data. The present disclosure enables the terminal to adapt to different scenarios, and can ensure interference measurement accuracy and improve data transmission performance.

In some implementations, the timing advance corresponding to the first time window is less than or equal to 0.

The present disclosure provides a more specific first timing advance, so that the first timing advance is used in the first time window to determine the uplink time unit boundary and send uplink data, thereby ensuring the interference measurement accuracy.

In some implementations, the timing advance corresponding to the second time window is greater than or equal to 0.

The present disclosure provides a more specific second timing advance, so that the terminal uses the second timing advance in the second time window to determine the uplink time unit boundary and send uplink data, thereby improving the data transmission performance.

FIG. 12 is a schematic diagram of another communications apparatus according to an example embodiment. Referring to FIG. 12, the apparatus 300 includes: a processing module 301 configured to determine at least two time windows. The processing module 301 is further configured to, in response to a network device being in one of the at least two time windows at a current moment, determine an uplink time unit boundary for the network device to receive uplink data based on a timing advance corresponding to the time window which the network device is in at the current moment. The specific time window is one of the at least two time windows. A receiving module 302 is configured to receive the uplink data based on the uplink time unit boundary.

The present disclosure determines different time windows and uses a corresponding time advance in a corresponding time window to determine the uplink time unit boundary and receive uplink data. The present disclosure can enable the network device to adapt to different scenarios, ensure interference measurement accuracy, and improve data transmission performance.

In some embodiments, the at least two time windows are determined by at least one of the following method(s): determining the at least two time windows, and sending first configuration information, where the first configuration information is used to indicate the at least two time windows; or determining the at least two time windows based on a predefined rule.

The present disclosure provides multiple ways to determine the time windows, so that a corresponding timing advance can be used in a corresponding time window to determine the uplink time unit boundary and receive uplink data. The present disclosure can enable the network device to adapt to different scenarios, can ensure interference measurement accuracy while improving data transmission performance.

In some embodiments, the first configuration information includes: a starting position of the time window and the number of time units included in the time window; or the starting position of the time window and an ending position of the time window.

The present disclosure provides multiple possible parameters included in the first configuration information to indicate the at least two time windows, so that a corresponding timing advance can be used in a corresponding time window to determine the uplink time unit boundary and receive uplink data. The present disclosure can enable the network device to adapt to different scenarios, and can ensure interference measurement accuracy while improving data transmission performance.

In some embodiments, the predefined rules include predefining a starting position of the time window and the number of time units included in the time window; or predefining the starting position of the time window and an ending position of the time window.

The present disclosure provides multiple possible predefined rules to indicate the at least two time windows, so that a corresponding timing advance can be used in a corresponding time window to determine uplink time unit boundary and receive uplink data. The present disclosure can enable the network device to adapt to different scenarios, and can ensure interference measurement accuracy while improving data transmission performance.

In some embodiments, the at least two time windows include a first time window; the first time window includes at least one sub-time window, and the sub-time window includes multiple consecutive uplink time units.

The present disclosure provides an implementation of the sub-time window(s) in the first time window, so that based on the sub-time window(s), the uplink time unit boundary is determined by using a corresponding timing advance in the first time window and uplink data is received. Thus, the present disclosure can ensure the interference measurement accuracy in the first time window.

In some embodiments, the at least two time windows include a first time window; the first time window includes at least one sub-time window, and the sub-time window includes at least one interference measurement time unit.

The present disclosure provides an implementation of the sub-time window(s) in the first time window, so that based on the sub-time window(s), an uplink time unit boundary is determined by using a corresponding timing advance in the first time window and uplink data is received. Thus, the present disclosure can ensure interference measurement accuracy in the first time window.

In some implementations, the interference measurement time unit(s) is(are) part or all of multiple consecutive uplink time units in the first time window.

In the present disclosure, part or all of the time units in the first time window may be interference measurement time unit(s). On the interference measurement time unit(s) in the first time window, a corresponding timing advance is used to determine an uplink time unit boundary and receive uplink data. The present disclosure can ensure the interference measurement accuracy in the first time window.

In some implementations, the sub-time window includes a maximum number of multiple consecutive uplink time units.

The present disclosure can determine the sub-time window based on multiple methods, so that a corresponding timing advance can be used in a corresponding sub-time window to determine the uplink time unit boundary and receive uplink data. The present disclosure can enable the network device to adapt to different scenarios, can ensure the interference measurement accuracy, and improve data transmission performance.

In some embodiments, the time unit includes any one of the following: an OFDM symbol; a slot; a frame; or a subframe.

The present disclosure provides various possible forms of the time units, which are also applicable for determining at least two time windows in different scenarios, and a corresponding timing advance may be used in a corresponding time window to determine an uplink time unit boundary and receive uplink data. The present disclosure can enable the network device to adapt to different scenarios, and can ensure interference measurement accuracy and improve data transmission performance.

In some embodiments, in response to the time window which the network device is in at the current moment being the first time window, the network device does not expect to receive an uplink channel or an uplink signal from the terminal on the last symbol before uplink/downlink switching; and/or, in response to the time window which the network device is in at the current moment being the first time window, the network device does not expect to send a downlink channel or a downlink signal to the terminal on the first symbol after the uplink/downlink switching; and/or, in response to the time window which the network device is in at the current moment being the first time window, the network device does not expect to send a downlink channel or a downlink signal to the terminal on the last symbol before the downlink/uplink switching; and/or, in response to the time window which the network device is in at the current moment being the first time window, the network device does not expect to receive an uplink channel or an uplink signal from the terminal on the first symbol after the downlink/uplink switching.

The terminal in the present disclosure may not send or receive data on a corresponding symbol within the first time window to ensure the interference measurement accuracy.

In some implementations, the at least two time windows include a first time window and a second time window. The first time window is a time window corresponding to interference measurement performed by the network device, and the second time window is a time window corresponding to other operation than the interference measurement performed by the network device.

The present disclosure determines the time window corresponding to the interference measurement performed by the network device, as well as the time window corresponding to other operation than the interference measurement performed by the network device. Thus, a corresponding timing advance can be used in a corresponding time windows to determine an uplink time unit boundary and receive uplink data. The present disclosure enables the network device to adapt to different scenarios, and can ensure interference measurement accuracy and improve data transmission performance.

In some implementations, the timing advance corresponding to the first time window is less than or equal to 0.

The present disclosure provides a more specific first timing advance, so that the first timing advance is used in the first time window to determine the uplink time unit boundary and send uplink data, thereby ensuring the interference measurement accuracy.

In some implementations, the timing advance corresponding to the second time window is greater than or equal to 0.

The present disclosure provides a more specific second timing advance, so that the terminal uses the second timing advance in the second time window to determine the uplink time unit boundary and send uplink data, thereby improving the data transmission performance.

In some embodiments, the apparatus 200 may further include a receiving module, and the apparatus 300 may further include a sending module. It can be understood that the apparatus 200 and the apparatus 300 may further include more modules based on actual conditions, and the specific modules may be determined based on actual conditions and are not limited in the present disclosure.

Regarding the apparatus in the above embodiments, the specific manner in which each module performs operations has been described in detail in the embodiments of the methods, and will not be elaborated here.

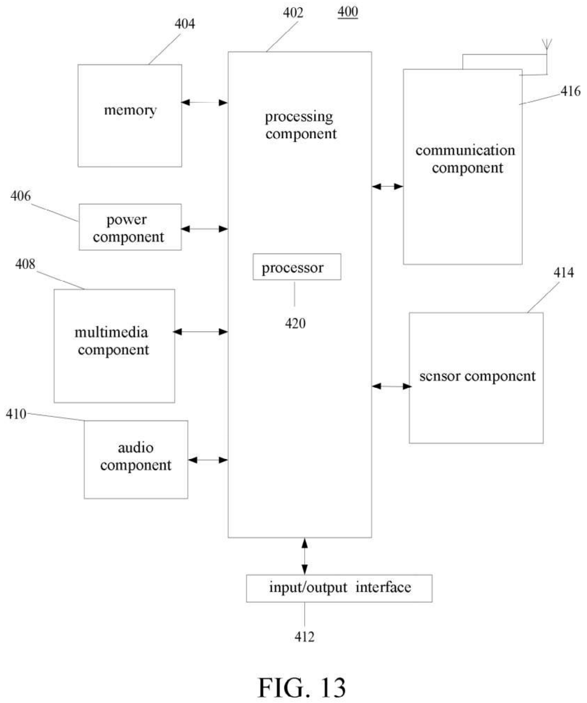

FIG. 13 is a block diagram of a communication device according to an example embodiment. For example, the device 400 may be any terminal such as a mobile phone, a computer, a digital broadcast terminal, a messaging device, a gaming console, a tablet, a medical device, exercise equipment, a personal digital assistant, and the like.

Referring to FIG. 13, the device 400 may include one or more of the following components: a processing component 402, a memory 404, a power component 406, a multimedia component 408, an audio component 410, an input/output (I/O) interface 412, a sensor component 414, and a communication component 416.

The processing component 402 typically controls overall operations of the device 400, such as the operations associated with display, telephone calls, data communications, camera operations, and recording operations. The processing component 402 may include one or more processors 420 to execute instructions to perform all or part of the steps in the above described methods. Moreover, the processing component 402 may include one or more modules which facilitate the interaction between the processing component 402 and other components. For instance, the processing component 402 may include a multimedia module to facilitate the interaction between the multimedia component 408 and the processing component 402.

The memory 404 is configured to store various types of data to support the operation of the device 400. Examples of such data include instructions for any applications or methods operated on the device 400, contact data, phonebook data, messages, pictures, video, etc. The memory 404 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 406 provides power to various components of the device 400. The power component 406 may include a power management system, one or more power sources, and any other components associated with the generation, management, and distribution of power in the device 400.

The multimedia component 408 includes a screen providing an output interface between the device 400 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 408 includes a front camera and/or a rear camera. The front camera and the rear camera may receive an external multimedia datum while the device 400 is in an operation mode, such as a photographing mode or a video mode. Each of the front camera and the rear camera may be a fixed optical lens system or have focus and optical zoom capability.

The audio component 410 is configured to output and/or input audio signals. For example, the audio component 410 includes a microphone ("MIC") configured to receive an external audio signal when the device 400 is in an operation mode, such as a call mode, a recording mode, and a voice recognition mode. The received audio signal may be further stored in the memory 404 or transmitted via the communication component 416. In some embodiments, the audio component 410 further includes a speaker to output audio signals.

The I/O interface 412 provides an interface between the processing component 402 and peripheral interface modules, such as a keyboard, a click wheel, buttons, and the like. The buttons may include, but are not limited to, a home button, a volume button, a starting button, and a locking button.

The sensor component 414 includes one or more sensors to provide status assessments of various aspects of the device 400. For instance, the sensor component 414 may detect an open/closed status of the device 400, relative positioning of components, e.g., the display and the keypad, of the device 400, a change in position of the device 400 or a component of the device 400, a presence or absence of user contact with the device 400, an orientation or an acceleration/deceleration of the device 400, and a change in temperature of the device 400. The sensor component 414 may include a proximity sensor configured to detect the presence of nearby objects without any physical contact. The sensor component 414 may also include a light sensor, such as a CMOS or CCD image sensor, for use in imaging applications. In some embodiments, the sensor component 414 may also include an accelerometer sensor, a gyroscope sensor, a magnetic sensor, a pressure sensor, or a temperature sensor.

The communication component 416 is configured to facilitate communication, wired or wirelessly, between the device 400 and other devices. The device 400 can access a wireless network based on a communication standard, such as WiFi, 2G, or 3G, or a combination thereof. In one example embodiment, the communication component 416 receives a broadcast signal or broadcast associated information from an external broadcast management system via a broadcast channel. In one example embodiment, the communication component 416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In example embodiments, the device 400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In example embodiments, there is also provided a non-transitory computer-readable storage medium including instructions, such as the memory 404 including instructions executable by the processor 420 in the device 400, for performing the above-described methods. For example, the non-transitory computer-readable storage medium may be a ROM, a Random Access Memory (RAM), a CD-ROM, a magnetic tape, a floppy disc, an optical data storage device, and the like.

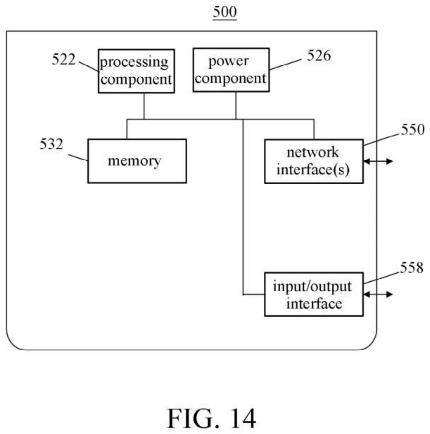

FIG. 14 is a block diagram of another communication device according to an example embodiment. For example, the device 500 may be provided as a base station or a server. Referring to FIG. 14, the device 500 includes a processing component 522 that further includes one or more processors, and memory resources represented by a memory 532 for storing instructions executable by the processing component 522, such as application programs. The application programs stored in the memory 532 may include one or more modules each corresponding to a set of instructions. Further, the processing component 522 is configured to execute the instructions to perform the above methods.

The device 500 may also include a power component 526 configured to perform power management of the device 500, wired or wireless network interface(s) 550 configured to connect the device 500 to a network, and an input/output (I/O) interface 558. The device 500 may operate based on an operating system stored in the memory 532, such as Windows Server^{™}, Mac OS X^{™}, Unix^{™}, Linux^{™}, FreeBSD^{™}, or the like.

By determining different time windows and using a corresponding timing advance in a corresponding time window to determine an uplink time unit boundary and to send the uplink data, the terminal can adapt to different scenarios. Thus, the present disclosure can ensure the interference measurement accuracy while improving data transmission performance.

It can be further understood that "multiple" in the present disclosure refers to two or more than two, and other quantifiers are similar. The expression "and/or" describes an association relationship of associated objects, indicating that three relationships may exist. For example, A and/or B may represent: A exists alone, A and B exist at the same time, and B exists alone. The character "/" generally indicates that associated objects before and after the character are in an "or" relationship. The singular forms "a/an", "said" and "the" are also intended to include plural forms, unless the context clearly indicates other meanings.

It can be further understood that the terms "first", "second", etc. are used to describe various information, but such information should not be limited to these terms. These terms are only used to distinguish the same type of information from each other, and do not indicate a specific order or degree of importance. In fact, the expressions "first", "second", etc. can be used interchangeably. For example, without departing from the scope of the present disclosure, first information may also be referred to as second information, and similarly, second information may also be referred to as first information.

It can be further understood that the meanings of the words "in response to" and "if" involved in the present disclosure depend on the context and the actual usage scenarios. For example, the word "in response to" used herein may be interpreted as "at the time of..." or "when..." or "if" or "in a case that".

It can be further understood that although operations are described in a specific order in the drawings in the embodiments of the present disclosure, it should not be understood as requiring the operations to be performed in the specific order shown in the drawings or in a serial order, or requiring the execution of all the operations shown in the drawings to obtain a desired result. In certain environments, multitasking and parallel processing may be advantageous.

Other embodiments of the present disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the scope of the appended claims.

## Claims

1. A communication method, performed by a terminal, the method comprising:
determining at least two time windows;
in response to the terminal being in one of the at least two time windows at a current moment, determining, based on a timing advance corresponding to the time window which the terminal is in at the current moment, an uplink time unit boundary for the terminal to send uplink data; and
sending the uplink data based on the uplink time unit boundary.

2. The method according to claim 1, wherein the at least two time windows are determined by at least one of:
receiving first configuration information, and determining the at least two time windows based on the first configuration information; or
determining the at least two time windows based on a predefined rule.

3. The method according to claim 2, wherein the first configuration information comprises:
a starting position of the time window and the number of time units comprised in the time window; or
the starting position of the time window and an ending position of the time window.

4. The method according to claim 2, wherein the predefined rule comprises:
predefining a starting position of the time window and the number of time units comprised in the time window; or
predefining the starting position of the time window and an ending position of the time window.

5. The method according to any one of claims 1 to 4, wherein the at least two time windows comprise a first time window, the first time window comprises at least one sub-time window, and the sub-time window comprises multiple consecutive uplink time units.

6. The method according to any one of claims 1 to 4, wherein the at least two time windows comprise a first time window, the first time window comprises at least one sub-time window, and the sub-time window comprises at least one interference measurement time unit.

7. The method according to claim 6, wherein the interference measurement time unit is part or all of multiple consecutive uplink time units in the first time window.

8. The method according to any one of claims 5 to 7, wherein the sub-time window comprises a maximum number of multiple consecutive uplink time units.

9. The method according to any one of claims 3 to 8, wherein the time unit comprises any one of:
an Orthogonal Frequency Division Multiplexing (OFDM) symbol;
a slot;
a frame; or
a subframe.

10. The method according to any one of claims 1 to 9, wherein in response to the time window which the terminal is in at the current moment being a first time window, the terminal does not expect to send an uplink channel or an uplink signal on the last symbol before uplink/downlink switching; and/or
wherein in response to the time window in which the terminal is in at the current moment being the first time window, the terminal does not expect to receive a downlink channel or a downlink signal on the first symbol after the uplink/downlink switching; and/or
wherein in response to the time window which the terminal is in at the current moment being the first time window, the terminal does not expect to receive a downlink channel or a downlink signal on the last symbol before downlink/uplink switching; and/or
wherein in response to the time window which the terminal is in at the current moment being the first time window, the terminal does not expect to send an uplink channel or an uplink signal on the first symbol after the downlink/uplink switching.

11. The method according to any one of claims 1 to 10, wherein the at least two time windows comprise a first time window and a second time window, the first time window is a time window corresponding to an interference measurement performed by a network device, and the second time window is a time window corresponding to other than the interference measurement performed by the network device.

12. The method according to claim 11, wherein a timing advance corresponding to the first time window is less than or equal to 0.

13. The method according to claim 11, wherein a timing advance corresponding to the second time window is greater than or equal to 0.

14. A communication method, performed by a network device, the method comprising:
determining at least two time windows;
in response to the network device being in one of the at least two time windows at a current moment, determining, based on a timing advance corresponding to the time window which the network device is in at the current moment, an uplink time unit boundary for the network device to receive uplink data; and
receiving the uplink data based on the uplink time unit boundary.

15. The method according to claim 14, wherein the at least two time windows are determined by at least one of:
determining the at least two time windows, and sending first configuration information, wherein the first configuration information is used to indicate the at least two time windows; or
determining the at least two time windows based on a predefined rule.

16. The method according to claim 15, wherein the first configuration information comprises:
a starting position of the time window and the number of time units comprised in the time window; or
the starting position of the time window and an ending position of the time window.

17. The method according to claim 15, wherein the predefined rule comprises:
predefining a starting position of the time window and the numbers of time unit comprised in the time window; or
predefining the starting position of the time window and an ending position of the time window.

18. The method according to any one of claims 14 to 17, wherein the at least two time windows comprise a first time window, the first time window comprises at least one sub-time window, and the sub-time window comprises multiple consecutive uplink time units.

19. The method according to any one of claims 14 to 17, wherein the at least two time windows comprise a first time window, the first time window comprises at least one sub-time window, and the sub-time window comprises at least one interference measurement time unit.

20. The method according to claim 19, wherein the interference measurement time unit is part or all of multiple consecutive uplink time units in the first time window.

21. The method according to any one of claims 18 to 20, wherein the sub-time window comprises a maximum number of multiple consecutive uplink time units.

22. The method according to any one of claims 16 to 21, wherein the time unit comprises any one of:
an Orthogonal Frequency Division Multiplexing (OFDM) symbol;
a slot;
a frame; or
a subframe.

23. The method according to any one of claims 14 to 22, wherein in response to the time window which the network device is in at the current moment being a first time window, the network device does not expect to receive an uplink channel or an uplink signal from a terminal on the last symbol before uplink/downlink switching; and/or
wherein in response to the time window which the network device is in at the current moment being the first time window, the network device does not expect to send a downlink channel or a downlink signal to the terminal on the first symbol after the uplink/downlink switching; and/or
wherein in response to the time window which the network device is in at the current moment being the first time window, the network device does not expect to send a downlink channel or a downlink signal to the terminal on the last symbol before downlink/uplink switching; and/or
wherein in response to the time window which the network device is in at the current moment being the first time window, the network device does not expect to receive an uplink channel or an uplink signal from the terminal on the first symbol after the downlink/uplink switching.

24. The method according to any one of claims 14 to 23, wherein the at least two time windows comprise a first time window and a second time window, the first time window is a time window corresponding to an interference measurement performed by the network device, and the second time window is a time window corresponding to other than the interference measurement performed by the network device.

25. The method according to claim 24, wherein a timing advance corresponding to the first time window is less than or equal to 0.

26. The method according to claim 24, wherein a timing advance corresponding to the second time window is greater than or equal to 0.

27. A communication apparatus, comprising:
a processing module configured to determine at least two time windows;
wherein the processing module is further configured to, in response to a terminal being in one of the at least two time windows at a current moment, determine an uplink time unit boundary for the terminal to send uplink data based on a timing advance corresponding to the time window which the terminal is in at the current moment; and
a sending module configured to send the uplink data based on the uplink time unit boundary.

28. A communication apparatus, comprising:
a processing module configured to determine at least two time windows;
wherein the processing module is further configured to, in response to a network device being in one of the at least two time windows at a current moment, determine an uplink time unit boundary for the network device to receive uplink data based on a timing advance corresponding to the time window which the network device is in at the current moment; and
a receiving module configured to receive the uplink data based on the uplink time unit boundary.

29. A communication device, comprising:
a processor; and
a memory configured to store instructions executable by the processor;
wherein the processor is configured to perform the method according to any one of claims 1 to 13.

30. A communication device, comprising:
a processor; and
a memory configured to store instructions executable by the processor;
wherein the processor is configured to perform the method according to any one of claims 14 to 26.

31. A non-transitory computer-readable storage medium, wherein when instructions in the storage medium are executed by a processor of a terminal, the terminal is caused to perform the method according to any one of claims 1 to 13.

32. A non-transitory computer-readable storage medium, wherein when instructions in the storage medium are executed by a processor of a network device, the network device is caused to perform the method according to any one of claims 14 to 26.
